(19) Europäisches Patentamt
European Patent Office
Office européen des brevets

(11) **EP 4 043 157 A1**

(12) **EUROPEAN PATENT APPLICATION**
published in accordance with Art. 153(4) EPC

(43) Date of publication:
**17.08.2022 Bulletin 2022/33**

(21) Application number: **20874502.6**

(22) Date of filing: **10.07.2020**

(51) International Patent Classification (IPC):
**B25J 5/00** (2006.01)   **B65G 1/00** (2006.01)
**G05D 1/02** (2020.01)

(52) Cooperative Patent Classification (CPC):
**B25J 5/00; B25J 13/00; B65G 1/00; G05D 1/02**

(86) International application number:
**PCT/JP2020/027055**

(87) International publication number:
**WO 2021/070439 (15.04.2021 Gazette 2021/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.10.2019 JP 2019187523**

(71) Applicant: **Sony Group Corporation
Tokyo 108-0075 (JP)**

(72) Inventors:
• **KAMIKAWA, Yasuhisa**
  **Tokyo 108-0075 (JP)**
• **KAI, Toshimitsu**
  **Tokyo 108-0075 (JP)**
• **KINOSHITA, Masaya**
  **Tokyo 108-0075 (JP)**
• **CONUS, William Alexandre**
  **Tokyo 108-0075 (JP)**

(74) Representative: **D Young & Co LLP
120 Holborn
London EC1N 2DY (GB)**

(54) **ROBOT DEVICE AND METHOD FOR CONTROLLING SAME**

(57)   Provided is a robot device that implements unloading or loading of a load to a loading platform, with less degrees of freedom.

The robot device includes a loading unit on which a load is placed, a posture changing unit that changes a posture of the loading unit, a moving unit that moves the loading unit, a taking-out unit that takes out the load placed on the load receiving surface and moves the load to the loading unit, and a control unit that controls operation of the posture changing unit and the moving unit. The control unit performs force control of the posture changing unit to cause the loading unit to follow the load receiving surface, and then controls the taking-out unit to take out the load placed on the load receiving surface and move the load to the loading unit.

*FIG. 5*

EP 4 043 157 A1

**Description**

TECHNICAL FIELD

The technology disclosed in the present specification (hereinafter referred to as "the present disclosure") relates to, for example, a robot device applied to transportation of loads and a method for controlling the robot device.

BACKGROUND ART

For example, in a field of logistics, introduction of mobile robots applied to transportation of loads is being promoted. This type of mobile robot is expected to implement, for example, autonomous operation of taking out and delivering a load placed on a shelf or a carriage.

A transport robot has been devised that uses an arm to take out a load (see, for example, Patent Documents 1 and 2). However, it is very difficult to lift and unload a heavy object with a small arm. Furthermore, if a high power arm is used in consideration of taking out a heavy object, the size of the arm increases and the cost also increases. Furthermore, a type of arm that grips a load with a gripper using frictional force grips the load with a large gripping force when taking out a heavy object, but in the case of a load packed in a soft box such as corrugated cardboard, there is also a possibility of crushing the box with the gripping force of the gripper.

Furthermore, since the last mile of logistics includes an outdoor environment, a road surface condition is not always constant unlike factories and warehouses. In a case where a load is placed on an installation surface inclined from the horizontal, the posture of the load is indefinite, so it is very difficult to grasp the load without using a multi-degree-of-freedom arm or the like. For example, a robot has been devised that performs force detection with an end effector at the tip of an arm and implements profiling operation of the end effector by force control (see Patent Document 3). However, to perform such profiling operation, an arm having six degrees of freedom capable of posture control is required, and the weight of the arm increases, which makes it difficult to mount the arm on a small robot.

CITATION LIST

PATENT DOCUMENT

Patent Document 1: Japanese Patent Application Laid-Open No. 2015-178141
Patent Document 2: Japanese Patent Application Laid-Open No. 2008-23639
Patent Document 3: Japanese Patent Application Laid-Open No. 2015-208836
Patent Document 4: Japanese Examined Patent Publication No. 4-45310

SUMMARY OF THE INVENTION

PROBLEMS TO BE SOLVED BY THE INVENTION

An object of the technology according to the present disclosure is to provide a robot device and a method for controlling the robot device that implement unloading or loading of a load to a loading platform, with less degrees of freedom.

SOLUTIONS TO PROBLEMS

The technology according to the present disclosure has been made in consideration of the problems described above, and a first aspect thereof is
a robot device including:

a loading unit on which a load is placed;
a posture changing unit that changes a posture of the loading unit;
a moving unit that moves the loading unit; and
a control unit that controls operation of the posture changing unit and the moving unit,
in which
the control unit performs force control of the posture changing unit to cause the loading unit to follow a load receiving surface.

The robot device according to the first aspect further includes a taking-out unit that takes out the load placed on the load receiving surface and moves the load to the loading unit. Furthermore, the control unit performs force control of the posture changing unit to cause the loading unit to follow the load receiving surface, and then controls the taking-out unit to take out the load placed on the load receiving surface and move the load to the loading unit.

Furthermore, a second aspect of the technology according to the present disclosure is

> a method for controlling a robot device including a loading unit on which a load is placed, a posture changing unit that changes a posture of the loading unit, and a moving unit that moves the loading unit,
> the method including:
>
> > a step of performing force control of the posture changing unit to cause the loading unit to follow a load receiving surface; and
> > a step of taking out a load placed on the load receiving surface.

EFFECTS OF THE INVENTION

With the technology according to the present disclosure, it is possible to provide a robot device and a method for controlling the robot device that implement unloading or loading of a load, with less degrees of freedom, by performing profile control of the posture of a loading platform by force control.

Note that, the effects described in the present specification are merely examples, and the effects brought about by the technology according to the present disclosure are not limited thereto. Furthermore, the technology according to the present disclosure may have additional effects other than the effects described above.

Still other objects, features, and advantages of the technology according to the present disclosure will become apparent from the detailed description based on embodiments and attached drawings to be described later.

BRIEF DESCRIPTION OF DRAWINGS

Fig. 1 is a diagram illustrating a degree-of-freedom configuration example of a robot device 100.
Fig. 2 is a diagram illustrating a configuration example of an electrical system of the robot device 100.
Fig. 3 is a diagram illustrating an exterior configuration (right side) of the robot device 100.
Fig. 4 is a diagram illustrating an exterior configuration (front) of the robot device 100.
Fig. 5 is a diagram illustrating operation in which the robot device 100 loads a load.
Fig. 6 is a diagram illustrating the operation in which the robot device 100 loads the load.
Fig. 7 is a diagram illustrating the operation in which the robot device 100 loads the load.
Fig. 8 is a diagram illustrating the operation in which the robot device 100 loads the load.
Fig. 9 is a flowchart illustrating an operation procedure when the robot device 100 loads a load onto a loading unit 101.
Fig. 10 is a diagram illustrating a carriage 1000 on which a plurality of loads is placed.
Fig. 11 is a diagram illustrating a state in which the robot device 100 carries a load stored in the carriage 1000 out.
Fig. 12 is a diagram illustrating a state in which the robot device 100 grips the load with a gripper 310.
Fig. 13 is a diagram illustrating a state in which the robot device 100 grips the gripper 310 and the load, and then scoops up the load and transfers the load to the loading unit 101.
Fig. 14 is a diagram illustrating a state in which the robot device 100 grips the gripper 310 and the load, and then scoops up the load and transfers the load to the loading unit 101.
Fig. 15 is a diagram illustrating a state in which the robot device 100 grips the gripper 310 and the load, and then scoops up the load and transfers the load to the loading unit 101.
Fig. 16 is a diagram illustrating an exterior configuration example of the robot device 100 provided with an elevating lift 1600.
Fig. 17 is a diagram illustrating an operation example of the robot device 100 provided with the elevating lift 1600.
Fig. 18 is a diagram illustrating the operation example of the robot device 100 provided with the elevating lift 1600.
Fig. 19 is a diagram illustrating the operation example of the robot device 100 provided with the elevating lift 1600.
Fig. 20 is a diagram illustrating an exterior configuration example of the robot device 100 provided with a protrusion 2000.
Fig. 21 is a diagram illustrating a state in which loads are placed on a fork-shaped tray 2100.
Fig. 22 is a diagram illustrating an operation example of a robot device 100 provided with the protrusion 2000.
Fig. 23 is a diagram illustrating an exterior configuration example of the robot device 100 provided with a suction unit 2300.

Fig. 24 is a diagram illustrating an exterior configuration example of the robot device 100 to which a gripper 2401 is attached via a lift 2400 capable of lifting operation.

Fig. 25 is a diagram illustrating an operation example of the robot device 100 illustrated in Fig. 24.

Fig. 26 is a diagram illustrating the operation example of the robot device 100 illustrated in Fig. 24.

Fig. 27 is a diagram illustrating the operation example of the robot device 100 illustrated in Fig. 24.

Fig. 28 is a diagram illustrating an exterior configuration example of a robot device 2800 using a wheel and a parallel link mechanism.

Fig. 29 is a diagram illustrating a modification regarding a gait of the robot device 100 illustrated in Fig. 5.

Fig. 30 is a diagram illustrating a configuration example of a robot device 3000 provided with a gripper 3001 on a foreleg.

Fig. 31 is a diagram illustrating a modification in which a plurality of robot devices cooperates to carry one load 3100 out.

Fig. 32 is a diagram illustrating a state in which the robot device 100 pulls out one load 3200 from a plurality of loads piled up in bulk.

MODE FOR CARRYING OUT THE INVENTION

Hereinafter, embodiments of the technology according to the present disclosure will be described in detail with reference to the drawings.

A. Device configuration

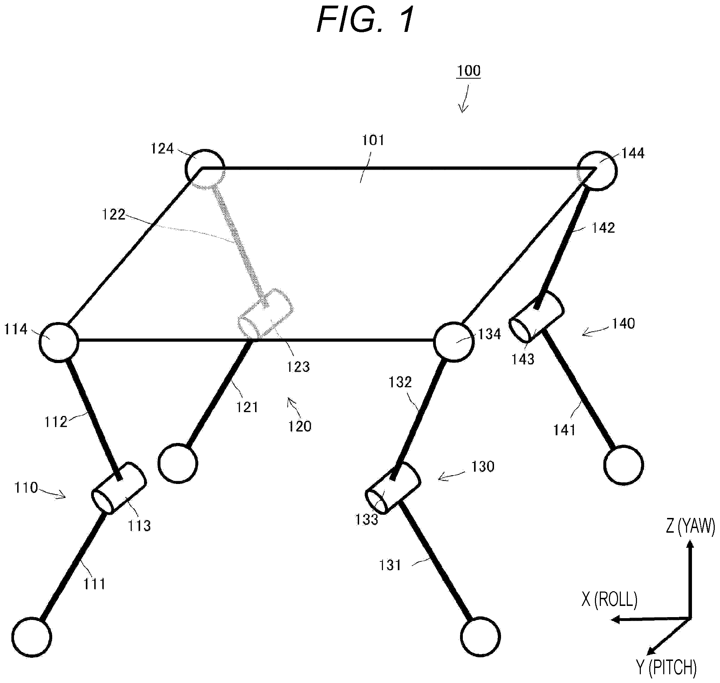

Fig. 1 schematically illustrates a degree-of-freedom configuration example of a robot device 100 to which the technology according to the present disclosure is applied. The illustrated robot device 100 is configured as a quadruped walking robot having four movable legs. That is, the robot device 100 includes a loading unit 101 corresponding to the body of the walking robot, and four movable legs 110, 120, 130, and 140 respectively coupled to the four corners of the loading unit 101. Here, the leg 110 is a left front leg (LF), the leg 120 is a right front leg (RF), the leg 130 is a left hind leg (LR), and the leg 140 is a right hind leg (RR). The robot device 100 can walk by operating the legs 110, 120, 130, and 140 synchronously (while switching between a standing leg and an idling leg alternately). Then, it is assumed that the robot device 100 transport a load placed on the loading unit 101. The robot device 100 is applied to a field of logistics, and transports a load from a final base to a time of delivery, for example.

The leg 110 includes two links 111 and 112, and a joint unit 113 connecting the link 111 with the link 112. The other end (lower end) of the link 111 corresponds to the sole of a foot and is installed on a floor surface. Furthermore, the upper end of the link 112 is attached to the loading unit 101 via the joint unit 114. The joint unit 113 has a rotational degree of freedom around the pitch axis, and the link 111 can be driven around the pitch axis with respect to the link 112 by an actuator (not illustrated) such as a pitch axis rotation motor. Furthermore, the joint unit 114 has rotational degrees of freedom around at least the pitch axis and the roll axis, and the link 112 can be driven around the pitch axis and the roll axis with respect to the loading unit 101 by an actuator (not illustrated) such as a pitch axis rotation motor. Note that, in the order of proximity to the loading unit 101, the link 112 is also referred to as the first link, and the link 111 is also referred to as the second link. Furthermore, in the order of proximity to the loading unit 101, the joint unit 114 corresponding to the hip or hip joint is also referred to as the first joint, and the joint unit 113 corresponding to the knee is also referred to as the second joint.

Furthermore, the leg 120 includes two links 121 and 122, and a joint unit 123 connecting the link 121 with the link 122. The other end (lower end) of the link 121 corresponds to the sole of a foot and is installed on the floor surface. Furthermore, the upper end of the link 122 is attached to the loading unit 101 via the joint unit 124. The joint unit 123 has a rotational degree of freedom around the pitch axis, and the link 121 can be driven around the pitch axis with respect to the link 122 by an actuator (not illustrated) such as a pitch axis rotation motor. Furthermore, the joint unit 124 has rotational degrees of freedom around at least the pitch axis and the roll axis, and the link 122 can be driven around the pitch axis and the roll axis with respect to the loading unit 101 by an actuator (not illustrated) such as a pitch axis rotation motor. Note that, in the order of proximity to the loading unit 101, the link 122 is also referred to as the first link, and the link 121 is also referred to as the second link. Furthermore, in the order of proximity to the loading unit 101, the joint unit 124 corresponding to the hip or hip joint is also referred to as the first joint, and the joint unit 123 corresponding to the knee is also referred to as the second joint.

Furthermore, the leg 130 includes two links 131 and 132, and a joint unit 133 connecting the link 131 with the link 132. The other end (lower end) of the link 131 corresponds to the sole of a foot and is installed on the floor surface. Furthermore, the upper end of the link 132 is attached to the loading unit 101 via the joint unit 134. The joint unit 133 has a rotational degree of freedom around the pitch axis, and the link 131 can be driven around the pitch axis with respect to the link 132 by an actuator (not illustrated) such as a pitch axis rotation motor. Furthermore, the joint unit 134 has rotational degrees of freedom around at least the pitch axis and the roll axis, and the link 132 can be driven around the pitch axis and the roll axis with respect to the loading unit 101 by an actuator (not illustrated) such as a pitch axis rotation motor. Note that, in the order of proximity to the loading unit 101, the link 132 is also referred to as the first link, and the link 131 is also referred to as the second link. Furthermore, in the order of proximity to the loading unit 101, the joint unit 134 corresponding to the hip or hip joint is also referred to as the first joint, and the joint unit 133 on the knee is also referred to as the second joint.

Furthermore, the leg 140 includes two links 141 and 142, and a joint unit 143 connecting the link 141 with the link 142. The other end (lower end) of the link 141 corresponds to the sole of a foot and is installed on the floor surface. Furthermore, the upper end of the link 142 is attached to the loading unit 101 via the joint unit 144. The joint unit 143 has a rotational degree of freedom around the pitch axis, and the link 141 can be driven around the pitch axis with respect to the link 142 by an actuator (not illustrated) such as a pitch axis rotation motor. Furthermore, the joint unit 144 has rotational degrees of freedom around at least the pitch axis and the roll axis, and the link 142 can be driven around the pitch axis and the roll axis with respect to the loading unit 101 by an actuator (not illustrated) such as a pitch axis rotation motor. Note that, in the order of proximity to the loading unit 101, the link 142 is also referred to as the first link, and the link 141 is also referred to as the second link. Furthermore, in the order of proximity to the loading unit 101, the joint unit 144 corresponding to the hip or hip joint is also referred to as the first joint, and the joint unit 143 on the knee is also referred to as the second joint.

The movable legs 110, 120, 130, and 140 each have three degrees of freedom of a rotational degree of freedom around the pitch axis of the first joint and rotational degrees of freedom around the roll and pitch axes of the second joint, and the entire robot device 100 has twelve degrees of freedom. Although the robot device 100 illustrated in Fig. 1 includes four legs, it should be understood that the technology disclosed in the present specification can be applied even if the robot device 100 is provided with two legs, three legs, or five or more legs.

Note that, the loading unit 101 is provided with a taking-out unit that scoops up a load placed on a shelf or a carriage and moving the load to the loading unit 101, a stopper that prevents the load from slipping down the loading unit 101, and the like, but illustration of those is omitted for simplification in Fig. 1. Furthermore, the loading unit 101 may be equipped with a head provided with a camera, a speaker, or the like, an arm for work, or the like.

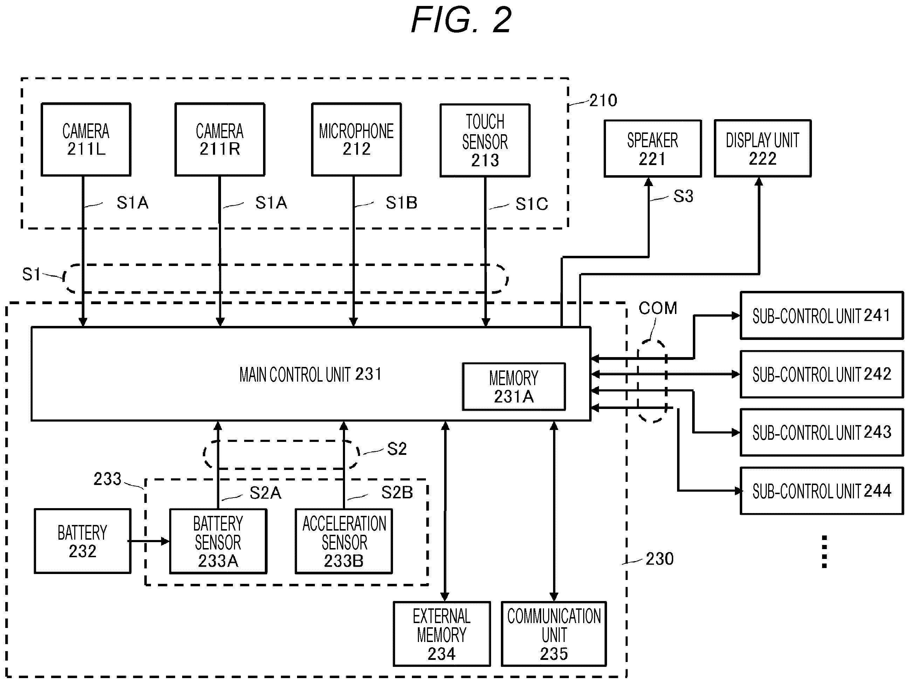

Fig. 2 illustrates a configuration example of an electrical system of the robot device 100.

In the robot device 100, as an external sensor unit 210, cameras 211L and 211R that function as left and right "eyes" of the robot device 100, a microphone 212 that functions as an "ear", a touch sensor 213, and the like are arranged at predetermined positions, respectively. As the cameras 211L and 211R, for example, a camera is used including an imaging element such as a complementary metal oxide semiconductor (CMOS) or a charge coupled device (CCD).

Note that, although not illustrated, the external sensor unit 210 may further include other sensors. For example, the external sensor unit 210 includes a torque sensor that detects rotational torque acting on the first joint and the second joint of each of the legs 110, 120, 130, and 140, an encoder that detects a joint angle, and a sole sensor that measures floor reaction force acting on the sole of each of the legs 110, 120, 130, and 140. Each sole sensor includes, for example, six degrees of freedom (6DOF) force sensor, or the like.

Furthermore, the external sensor unit 210 may include a sensor capable of measuring or estimating a direction and a distance of a predetermined target, such as Laser Imaging Detection and Ranging (LIDAR), a Time OF Flight (TOF) sensor, and a laser range sensor. Furthermore, the external sensor unit 210 may include a Global Positioning System (GPS) sensor, an infrared sensor, a temperature sensor, a humidity sensor, an illuminance sensor, and the like.

Furthermore, in the robot device 100, a speaker 221 and a display unit 222 are respectively arranged at predetermined positions as output units. The speaker 221 output voice, and functions to perform voice guidance, for example. Furthermore, the display unit 222 displays a status of the robot device 100 and a response to a user.

In a controller unit 230, a main control unit 231, a battery 232, an internal sensor unit 233 including a battery sensor 233A and an acceleration sensor 233B, an external memory 234, and a communication unit 235 are arranged.

The cameras 211L and 211R of the external sensor unit 210 image a surrounding situation and send an obtained image signal S1A to the main control unit 231. The microphone 212 collects voice input from the user and sends an obtained voice signal S1B to the main control unit 231. Input voice given to the robot device 100 by the user includes an activation word and various command voices (voice commands) such as "walk", "turn right", "hurry", and "stop". Note that, although only one microphone 82 is drawn in Fig. 2, two or more microphones may be provided like left and right ears to estimate a sound source direction.

Furthermore, the touch sensor 213 of the external sensor unit 210 is laid on a placement surface of the loading unit 101, for example, and detects a pressure received at a place where a load is placed, and a result of the detection is sent to the main control unit 231 as a pressure detection signal S1C.

The battery sensor 233A of the internal sensor unit 233 detects a remaining amount of energy of the battery 232 at predetermined cycles, and sends a detection result as a battery remaining amount detection signal S2A to the main control unit 231.

The acceleration sensor 233B detects acceleration in three axis directions (x (roll) axis, y (pitch) axis, and z (yaw) axis) at predetermined cycles for movement of the robot device 100, and sends a result of the detection to the main control unit 231 as an acceleration detection signal S2B. The acceleration sensor 233B may be, for example, an Inertial Measurement Unit (IMU) equipped with a 3-axis gyro and a 3-direction acceleration sensor. By using the IMU, it is possible to measure an angle and an acceleration of the robot device 100 main body or the loading unit 101.

The external memory 234 stores programs, data, control parameters, and the like, and supplies the programs and data to a memory 231A built in the main control unit 231 as needed. Furthermore, the external memory 234 receives and stores data and the like from the memory 231A. Note that, the external memory 234 may be configured as a cartridge type memory card like an SD card, for example, and may be detachable from the robot device 100 main body (or the controller unit 230).

The communication unit 235 performs data communication with the outside on the basis of a communication method such as Wi-Fi (registered trademark) or Long Term Evolution (LTE). For example, a program such as an application executed by the main control unit 231 and data required for executing the program can be acquired from the outside via the communication unit 235.

The memory 231A is built in the main control unit 231. The memory 231A stores programs and data, and the main control unit 231 performs various types of processing by executing the programs stored in the memory 231A. That is, the main control unit 231 determines surrounding and internal situations of the robot device 100, presence or absence of a command from the user or an action from the user, or the like, on the basis of the image signal S1A, the voice signal S1B, and the pressure detection signal S1C (hereinafter, these are collectively referred to as external sensor signals S1) respectively supplied from the cameras 211L and 211R, the microphone 212, and the touch sensor 213 of the external sensor unit 210, and the battery remaining amount detection signal S2A and the acceleration detection signal S2B (hereinafter these are collectively referred to as internal sensor signals S2) respectively supplied from the battery sensor 233A and the acceleration sensor 233B of the internal sensor unit 233. Note that, information on the weight and the position of the center of gravity of the robot device 100 main body (however, a state in which no load is placed on the loading unit 101) may be stored in the memory 231A in advance.

Then, the main control unit 231 determines an action of the robot device 100 and an expression action to be activated for the user, on the basis of the surrounding and internal situations of the robot device 100, a determination result of the presence or absence of the command from the user or the action from the user, a control program stored in advance in the internal memory 231A, or various control parameters and the like stored in the external memory 234 loaded at that time, and generates a control command based on a result of the determination and send the control command to each of sub-control units 241, 242, etc.

The sub-control units 241, 242, ... are in charge of operation control of subsystems in the robot device 100, respectively, and drive the subsystems on the basis of the control command supplied from the main control unit 231. The above-mentioned movable legs 110, 120, 130, and 140, and the taking-out unit that scoops up a load (described above) correspond to the subsystems, and are driven and controlled by the corresponding sub-control units 241, 242, 243, 244, etc. Specifically, the sub-control units 241, 242, 243, 244, ... perform drive control of the joint units 113, 123, 133, and 143, and drive control of the taking-out unit. The taking-out unit performs operation such as scooping up a load placed on a shelf or a carriage and moving the load to the loading unit 101.

B. Load transportation operation

It is assumed that the robot device 100 is applied to the field of logistics, and transports a load in the last mile from a final base to a delivery destination, for example. Thus, the robot device 100 autonomously performs operation of scooping up the load placed on the shelf or the carriage and placing the load on the loading unit 101, at the final base, and then moving the load to the delivery destination.

Since the last mile of logistics includes an outdoor environment, a road surface condition is not always constant unlike factories and warehouses. For this reason, the robot device 100 may have to scoop up a load placed on an installation surface inclined from the horizontal and having an indefinite posture.

For example, a robot has been devised that use an arm to scoop up a load from a shelf and a carriage. However, to grasp a load in any posture, the arm requires a large number of degrees of freedom, so that the weight of the arm increases and it becomes difficult to miniaturize the robot. Furthermore, a type of arm that grips a load with a gripper using frictional force grips the load with a large gripping force when taking out a heavy object, but in the case of a load packed in a soft box such as corrugated cardboard, there is also a possibility of crushing the box with the gripping force of the gripper.

Thus, in the technology according to the present disclosure, posture control of the robot device 100 is performed so that the loading unit 101 follows a surface on which a load is placed, and then the load is scooped up and the load is moved onto the loading unit 101. Here, the surface on which the load is placed is, for example, a shelf or a carriage on which the load is placed. Furthermore, by performing the posture control of the robot device 100 by force control using the plurality of movable legs 110 to 140, it is possible to cause the loading unit 101 to follow the surface on which the load is placed. Then, since the loading unit 101 on which the load is to be loaded has already followed the surface on which the load is placed such as the shelf or the carriage, it is possible to move the load to the loading unit 101 relatively easily by pulling the gripper into the loading unit 101.

Even a gripper with a simple configuration that has only a degree of freedom of opening and closing and a degree of freedom of movement in one direction can sufficiently move a load, and the robot device 100 does not require an arm with multiple degrees of freedom, in other words, the size and weight of the robot device 100 can be reduced, and the cost can be reduced.

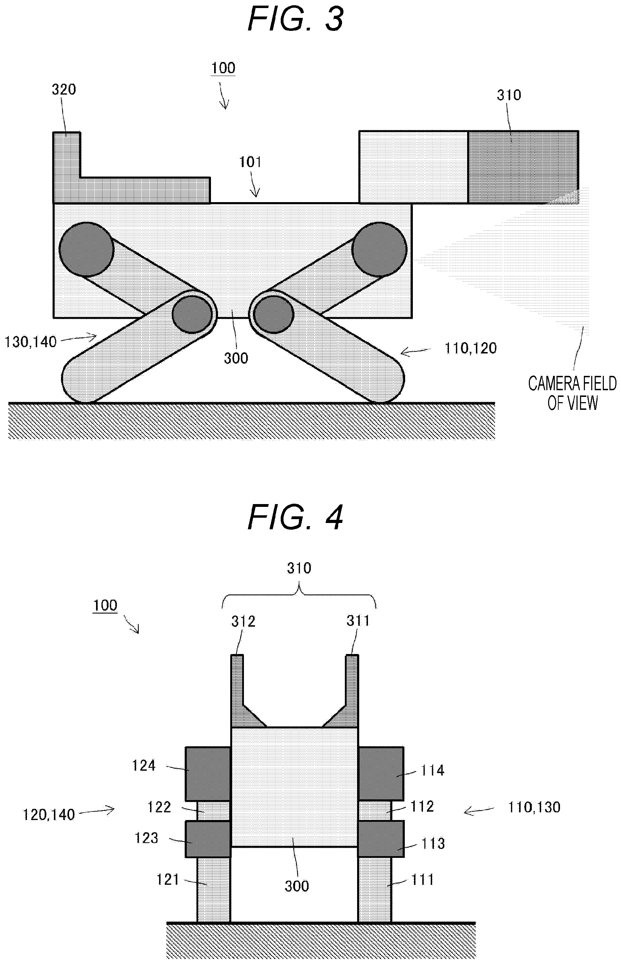

Figs. 3 and 4 illustrate an exterior configuration of the robot device 100 according to the present disclosure. However, Fig. 3 illustrates a state viewed from the right side, and Fig. 4 illustrates a state viewed from the front. In Figs. 3 and 4, the same reference numerals are given to components corresponding to those in Fig. 1, and thus detailed description of these components will be omitted.

In a body unit 300, circuit components are built, such as the controller unit 230 and the sub-control units 241, 242, 243, 244, etc. The front leg 110 is coupled to the body unit 300 by the first joint 114 corresponding to a shoulder joint or a hip joint, and the front leg 120 is also coupled to the body unit 300 by the first joint 124. Furthermore, although hidden in Fig. 4, the hind leg 130 and the hind leg 140 are also coupled to the body unit 300 by the first joints 134 and 144, respectively.

The upper surface of the body unit 300 constitutes the loading unit 101 on which a load is placed. Although omitted in Figs. 1 and 2, referring to Fig. 3, a gripper 310 is arranged in front of the loading unit 101. Referring to Fig. 4, the gripper 310 includes a pair of claws 311 and 312, and the claws 311 and 312 open and close in parallel, thereby being able to grip an object. The gripper 310 is used to scoop up a load placed on a shelf or a carriage and move the load to the loading unit 101. Referring to Fig. 3 again, a stopper 320 that prevents the load from slipping down is arranged near the rear end of the loading unit 101.

As described later, the posture control of the robot device 100 is performed by force control so that the loading unit 101 follows the surface on which the load is placed, and then the load is scooped up and the load is moved onto the loading unit 101. For this reason, it is sufficient that the gripper 310 has only a degree of freedom of opening and closing and a degree of freedom of movement in the front-rear direction, and other degrees of freedom are unnecessary. However, the degree of freedom of movement of the gripper 310 is in a direction parallel to a loading surface of the loading unit 101. Furthermore, since work of transferring the load from a load receiving surface to the loading unit 101 is performed in a state in which the loading unit 101 has followed the surface on which the load is placed, a large gripping force is not required even when a heavy object is taken out. For example, a cardboard box or a precision package packed with a load can be gently pulled out or placed without being crushed by the gripping force of the gripper.

Note that, although the cameras 211L and 211R (described above) that function as the left and right "eyes" of the robot device 100 are not illustrated in Figs. 3 and 4, they are preferably attached so that the front of the robot device 100 is in the line-of-sight direction. By performing image recognition on images imaged by the cameras 211L and 211R, it is possible to detect the load and the shelf or shelf on which the load is placed. For reference, Fig. 3 illustrates a viewing angle of the cameras 211L and 211R. Furthermore, LIDAR or a TOF sensor other than the camera may be used to detect the load and the shelf or shelf on which the load is placed.

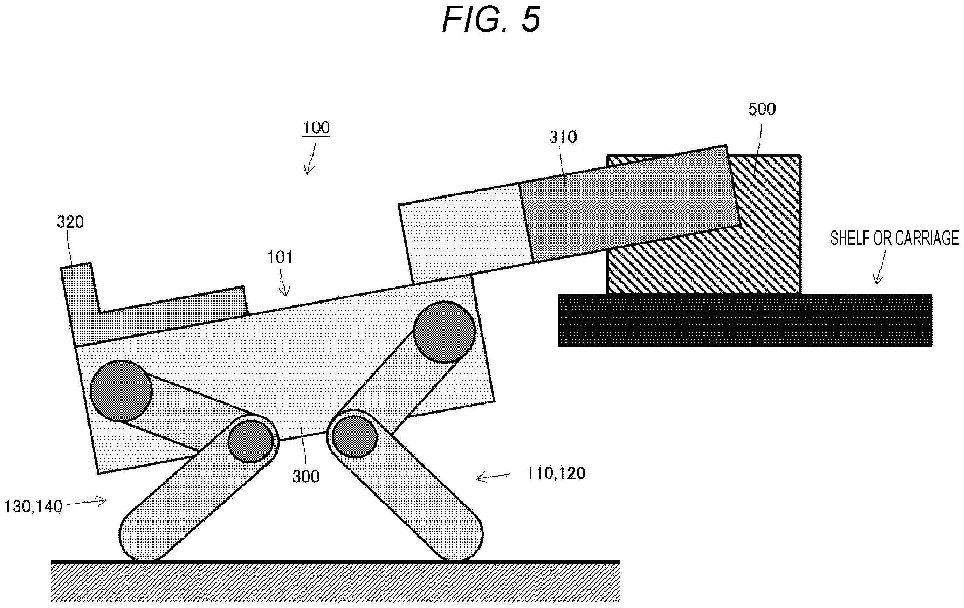

Figs. 5 to 8 illustrate operation in which the robot device 100 loads a load onto the loading unit 101 by using the gripper.

The robot device 100 searches for a load to be a target of transportation on the basis of the images imaged by the cameras 211L and 211R, and detection results by the LIDAR or the TOF sensor. In the examples illustrated in Figs. 5 to 8, a load 500 placed on a shelf 501 is a target of transportation.

First, as illustrated in Fig. 5, the robot device 100 approaches the load 500 and roughly detects an inclination of the load receiving surface of the shelf 501 on which the load 500 is placed by image recognition of the images imaged by the cameras 211L and 211R, for example. Then, the robot device 100 determines a rotation direction of the posture of the body unit 300 for causing the loading unit 101 to follow the load receiving surface after the gripper 310 integrally attached to the body unit 300 and the load receiving surface come into contact with each other, and formulates a trajectory plan for the gripper 310, and then executes the planned trajectory. In the examples illustrated in Figs. 5 to 8, when the trajectory plan for the body unit 300 is formulated so that clockwise rotation on the page is performed after the load receiving surface comes in contact, the trajectory is executed and force control is performed so that the loading unit 101 is caused to follow the load receiving surface.

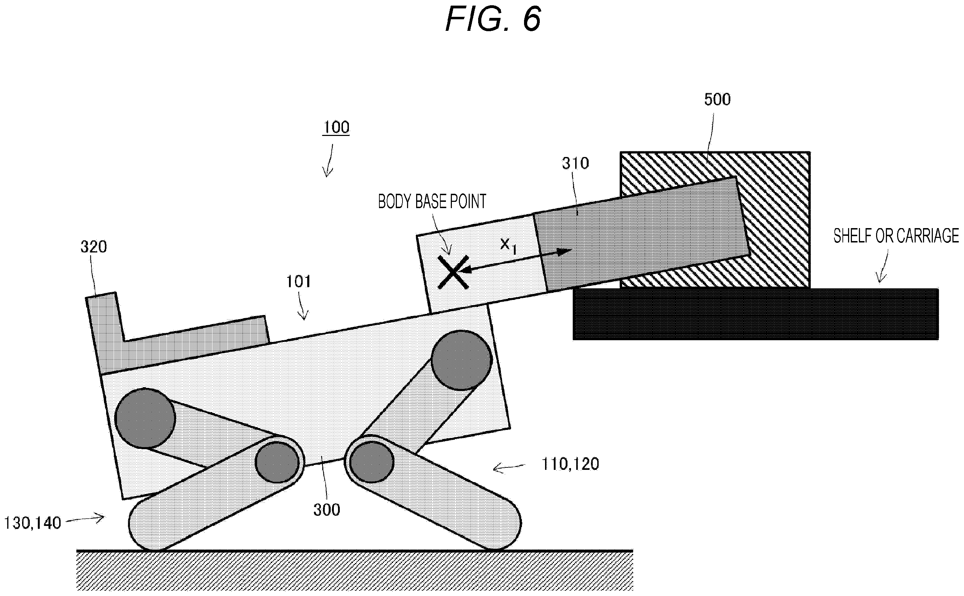

As illustrated in Fig. 6, when the gripper 310 integrally attached to the body unit 300 comes into contact with the load receiving surface, force control of the posture of the body unit 300 is performed so that the loading unit 101 follows the load receiving surface. The robot device 100 can estimate a contact point position between the gripper 310 and the load receiving surface (that is, a position where contact force is applied from the load receiving surface) on the basis of whole body force control performing posture control of the body unit 300 by using the legs 110, 120, 130, and 140. Then, the posture control of the body unit 300 is performed so that the contact point position moves to the vicinity of the center of a contact surface between the gripper 310 and the load receiving surface, and when the contact point position has entered the vicinity of the center of the contact surface, it is determined that the body unit 300 has followed the load receiving surface.

When the gripper 310 comes into contact with the load receiving surface, external force $F_b$ and a moment $M_b$ acting on a base point of the body unit 300 can be obtained from the whole body force control of the robot device 100. The base point of the body unit 300 referred to here is a root portion of the gripper 310 attached to the body unit 300. The robot device 100 can estimate contact force $F_c$ received by the gripper 310 from the load receiving surface at a contact point position x between the gripper 310 and the load receiving surface on the basis of dynamics ($F_b$, $M_b$) of the base point of the body unit 300. Here, a distance from the base point of the body unit 300 to a contact point is defined as the contact point position x. The contact point position x where the gripper 310 first comes into contact with the load receiving surface is defined as $x_1$.

The robot device 100 drives the legs 110, 120, 130, and 140 until the contact force $F_c$ reaches a predetermined set value F1. Note that, the contact force $F_c$ is equal to the external force $F_b$ acting on the base point, and furthermore, the contact point position x holds the following equation (1).

[Expression 1]

$$
\left.
\begin{aligned}
F_b &= F_c \\
x &= \frac{M_b}{F_b}
\end{aligned}
\right\}
\qquad \cdots (1)
$$

Thereafter, while the contact force $F_c$ acting on the base point of the body unit 300 is kept at the predetermined set value F1, the legs 110, 120, 130, and 140 are driven, and the force control of the posture of the body unit 300 is performed in a rotation direction of the trajectory plan of the body unit 300 already determined.

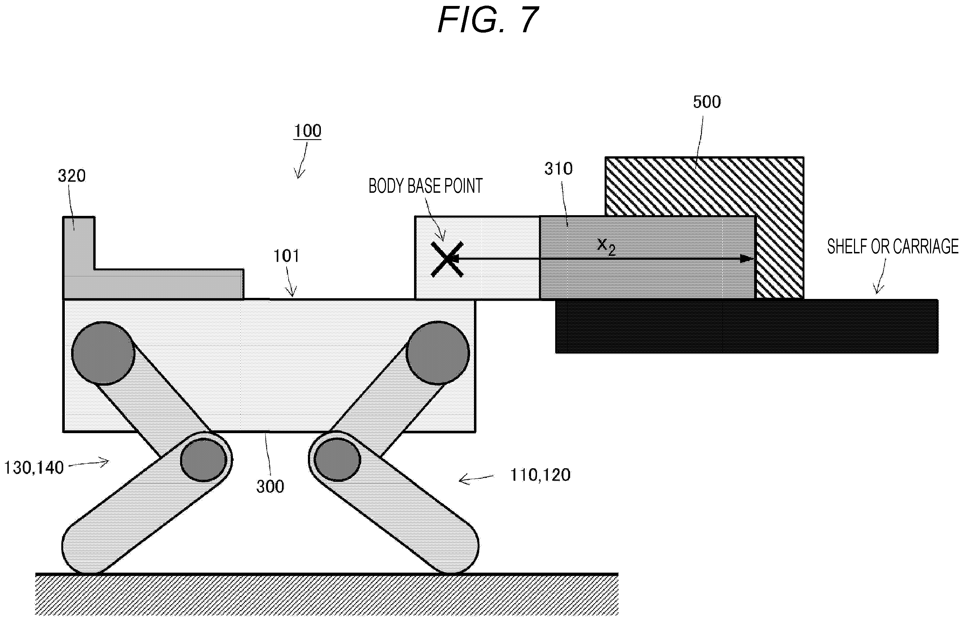

When the force control of the posture of the body unit 300 is performed continuously to cause rotation in accordance with the trajectory plan while the contact force $F_c$ is kept at the predetermined set value F1, the posture of the body unit 300 (or the loading unit 101 on the upper surface of the body unit 300) begins to follow the load receiving surface as illustrated in Fig. 7. As a result, the contact point position x between the gripper 310 and the load receiving surface begins to vary.

Here, in Fig. 7, the contact point position x where the gripper 310 first comes into contact with the load receiving surface is defined as $x_1$, and a contact point position $x_2$ is defined between the tip of the gripper 310 and the load receiving surface. Note that, the contact point position $x_2$ is a contact point position where the gripper 310 finally comes into contact with the load receiving surface, and can also be said to be a contact point position that will not follow the load receiving surface any longer. Then, for example, with $(x_1 + x_2)/2$ as a threshold value, when the contact point position reaches the threshold value, the contact point position has entered the vicinity of the center of the contact surface, and it is determined that the body unit 300 or the loading unit 101 has almost completely followed the load receiving surface.

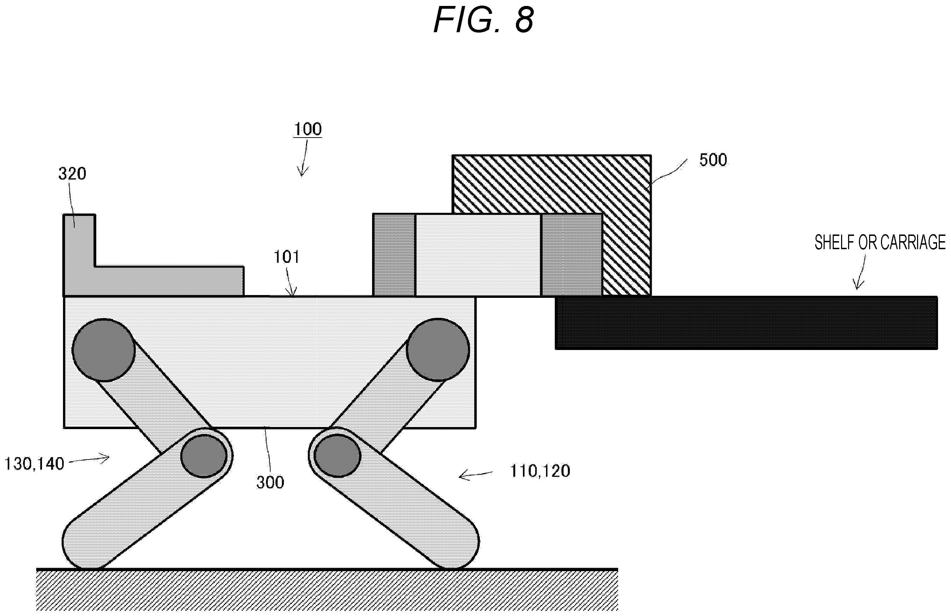

In the posture of the robot device 100 illustrated in Fig. 7, the body unit 300 or the loading unit 101 has almost completely followed the load receiving surface. Thus, the robot device 100 closes the two claws 311 and 312 of the gripper 310 until the claws come into contact with the load, to grip the load 500. Then, as illustrated in Fig. 8, the gripper 310 is pulled in a direction toward the main body of the robot device 100 while a state of gripping the load 500 is kept, whereby the load 500 can be moved to the loading unit 101. The load gripped by the gripper 310 is pulled to the body unit 300, whereby the center of gravity of the entire robot device 100 including the load moves to the vicinity of the center of a support polygon, in the robot device 100, so that the posture is stabilized and a risk of falling over is low. Note that, the gripper 310 may be provided with a belt conveyor or a linear motion mechanism for pulling in the load 500.

As can be seen from Figs. 5 to 8, it is sufficient that the gripper 310 has only the degree of freedom of opening and closing and the degree of freedom of movement in the front-rear direction, and other degrees of freedom are unnecessary. Furthermore, since work of transferring the load from a load receiving surface to the loading unit 101 is performed in a state in which the loading unit 101 has followed the surface on which the load is placed, a large gripping force is not required even when a heavy object is taken out. For example, a cardboard box or a precision package packed with a load can be gently pulled out or placed without being crushed by the gripping force of the gripper.

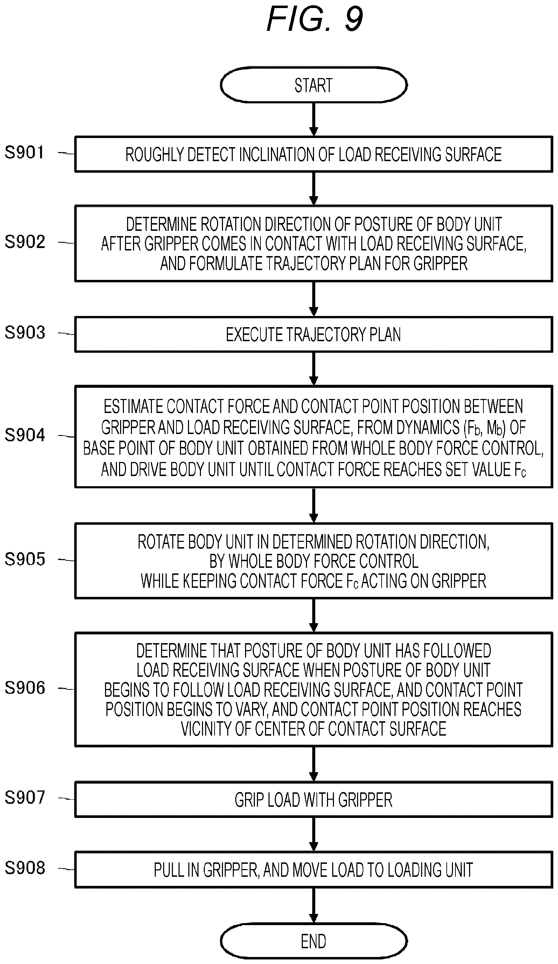

Fig. 9 illustrates an operation procedure when the robot device 100 loads a load onto the loading unit 101 in the form of a flowchart. The operation procedure is implemented, for example, in a form in which the main control unit 231 in the controller unit 230 sends a control command to each of the sub-control units 241, 242, 243, 244, ... on the basis of sensor information input from the external sensor unit 210.

First, the robot device roughly detects the inclination of the load receiving surface of the shelf 501 on which the load 500 is placed, on the basis of the image recognition of the images imaged by the cameras 211L and 211R, for example (step S901). See, for example, Fig. 5.

Next, the robot device 100 the robot device 100 determines the rotation direction of the posture of the body unit 300 for causing the loading unit 101 to follow the load receiving surface after the gripper 310 integrally attached to the body unit 300 and the load receiving surface come into contact with each other, and formulates the trajectory plan for the gripper 310 (step S902). Then, the robot device 100 executes the trajectory plan (step S903). See, for example, Fig. 5.

While rotating the posture of the body unit 300 in accordance with the formulated trajectory plan in a state in which the gripper 310 and the load receiving surface are in contact with each other (see, for example, Fig. 6), the robot device 100 obtains the external force $F_b$ and the moment $M_b$ acting on the base point of the body unit 300 on the basis of the whole body force control of the robot device 100. Next, the robot device 100 estimate the contact force $F_c$ received by the gripper 310 from the load receiving surface at the contact point position x between the gripper 310 and the load receiving surface on the basis of the dynamics $(F_b, M_b)$ of the base point of the body unit 300. Then, the robot device 100 continues to rotate the posture of the body unit 300 until the contact force $F_c$ reaches the predetermined set value F1 (step S904).

Thereafter, while keeping the contact force $F_c$ acting on the base point of the body unit 300 at the predetermined set value F1 until the predetermined set value F1 is reached, the robot device 100 rotates the posture of the body unit 300 in the rotation direction of the trajectory plan of the body unit 300 determined in step S902, by the whole body force control of the robot device 100 (step S905). See, for example, Fig. 6.

When the posture of the body unit 300 (or the loading unit 101 on the upper surface of the body unit 300) begins to follow the load receiving surface, the contact point position x between the gripper 310 and the load receiving surface begins to vary. Then, the robot device 100 determines that the body unit 300 or the loading unit 101 has almost completely followed the load receiving surface when the contact point position has entered the vicinity of the center of the contact surface (step S906). See, for example, Fig. 7.

Next, the robot device 100 closes the two claws 311 and 312 of the gripper 310 until the claws come into contact with the load, to grip the load 500 (step S907).

Then, as illustrated in Fig. 8, the gripper 310 is pulled in the direction toward the main body of the robot device 100 while the state of gripping the load 500 is kept, whereby the load 500 is moved to the loading unit 101 (step S908).

According to the operation procedure illustrated in Fig. 9, the robot device 100 can perform the posture control of the body unit 300 by the whole body force control, and it is sufficient for loading a load if the robot device 100 is equipped with the gripper 310 having the degree of freedom of opening and closing and the degree of freedom of movement in the front-rear direction. Furthermore, since work of transferring the load from a load receiving surface to the loading unit 101 is performed in a state in which the loading unit 101 has followed the surface on which the load is placed, a large gripping force is not required even when a heavy object is taken out. For example, a cardboard box or a precision package packed with a load can be gently pulled out or placed without being crushed by the gripping force of the gripper.

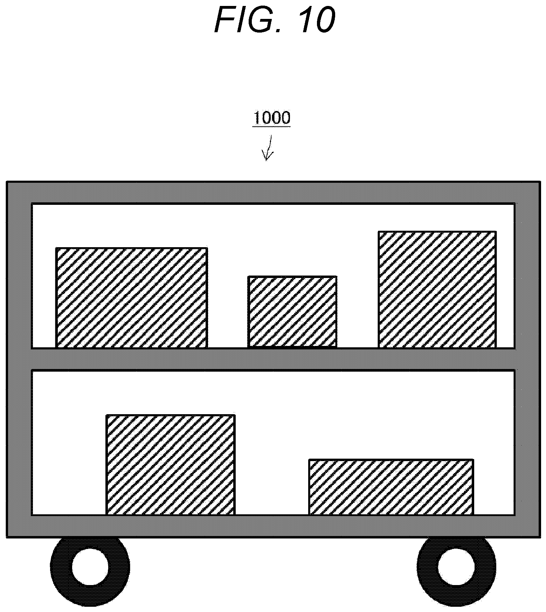

Figs. 5 to 8 illustrate an example in which the robot device 100 carries a load placed on a shelf out. The robot device 100 can carry not only a load placed on a shelf but also a load placed on various load receiving surfaces out. For example, even in a case where a plurality of loads is placed on a carriage 1000 having multiple (two in the illustrated example) shelves as illustrated in Fig. 10, the robot device 100, in accordance with the operation procedure illustrated in Fig. 9, can roughly detect the load receiving surface on which a target load is placed, cause the loading unit 101 to follow the load receiving surface through the force control of the body unit 300 by the whole body force control, grip the load with relatively small force with the gripper 310, and move the load from the carriage 1000 to the loading unit 101. The carriage 1000 is a carriage for carrying and moving a load, and has casters at the four corners of the bottom surface.

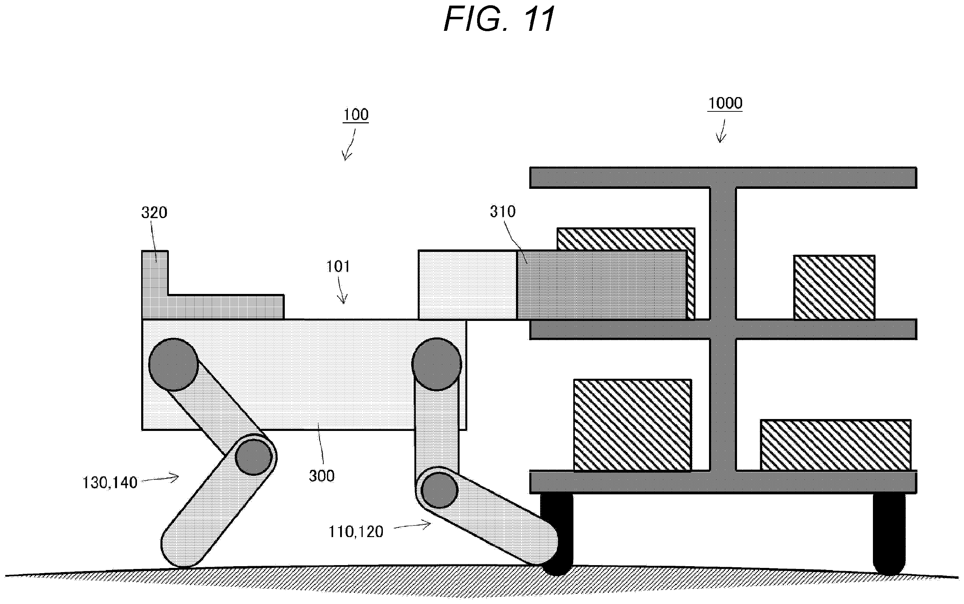

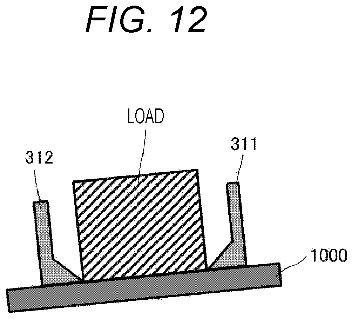

Fig. 11 illustrates a state in which the robot device 100 carries a load stored in the carriage 1000 out. However, here, a state is illustrated where the robot device 100 accesses the load from a side surface of the carriage 1000. It is also assumed that the robot device 100 performs work of carrying the load out from the carriage 1000 on a sloped road surface. Fig. 12 illustrates a state in which a target load is gripped by the gripper 310. As illustrated in Fig. 12, it is also assumed that the load receiving surface is inclined in the opening and closing direction of the gripper 310.

The robot device 100 searches for a load to be carried out from the plurality of loads stored in the carriage 1000 on the basis of the images imaged by the cameras 211L and 211R and the detection results by the LIDAR or the TOF sensor. Upon roughly detecting an inclination of the load receiving surface on which the target load is placed, the robot device 100 determines a rotation direction of the posture of the body unit 300 for causing the loading unit 101 to follow the load receiving surface, formulates a trajectory plan for the gripper 310, and execute the trajectory plan.

After the gripper 310 comes into contact with the load receiving surface, the robot device 100 estimates the external force $F_b$ and the moment $M_b$ acting on the base point of the body unit 300 on the basis of the whole body force control, and continues to perform the force control of the posture of the body unit 300 while keeping the contact force $F_c$ received by the gripper 310 from the load receiving surface at the predetermined set value F1. Then, upon detecting that the contact point between the gripper 310 and the load receiving surface has entered the vicinity of the center of the contact surface, the robot device 100 determines that the body unit 300 or the loading unit 101 has almost completely followed the load receiving surface, and grips the load with the gripper 310.

Note that, in a case where the carriage 1000 is on an inclined road surface, the carriage 1000 may start moving even while the robot device 100 is approaching the load. Thus, as illustrated in Fig. 11, an idling leg such as the front leg 110 or 120 may be used to hold the casters so that the carriage 1000 does not slip down.

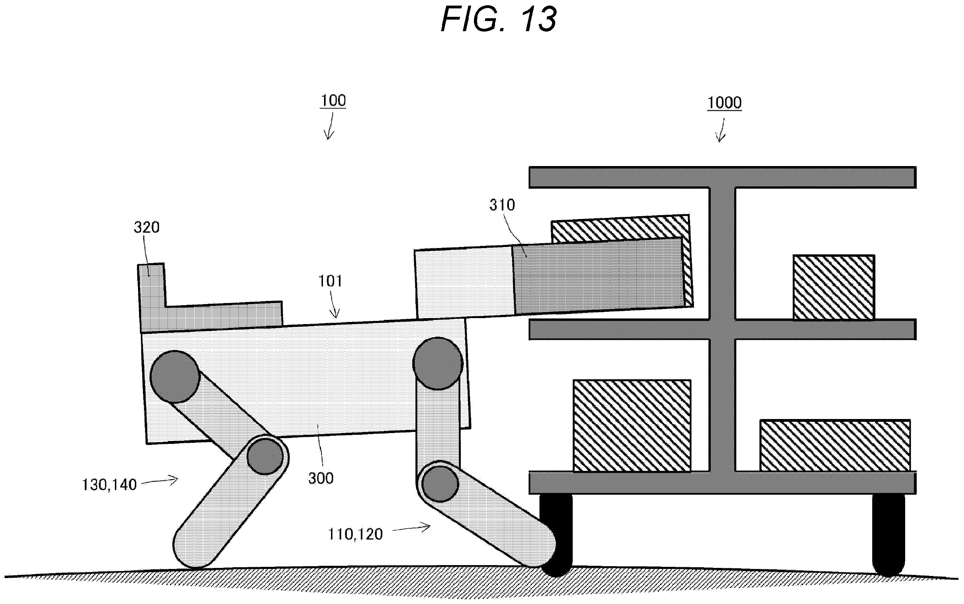

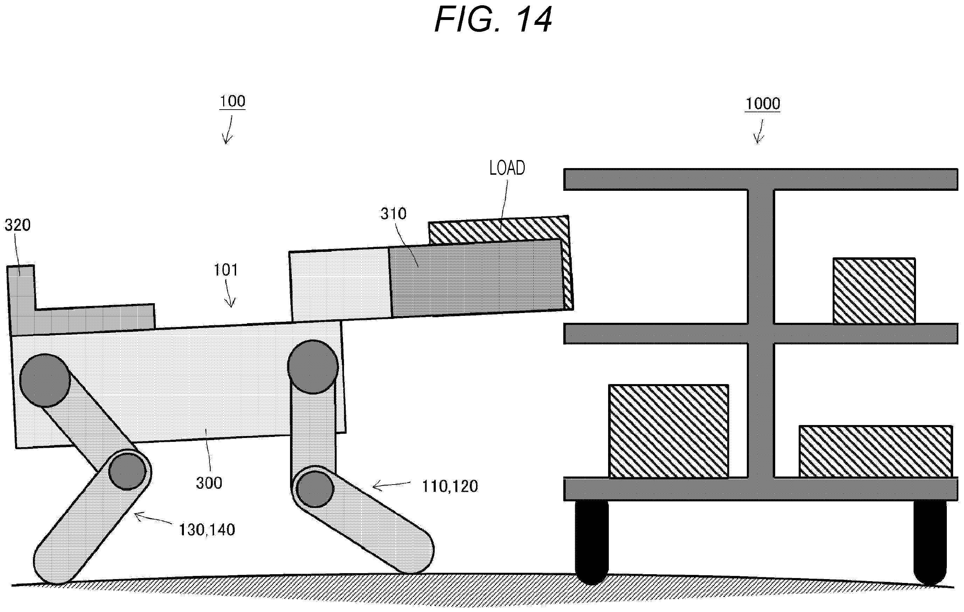

Figs. 13 to 15 illustrate a state in which the gripper 310 and the load are gripped, and then the load is scooped up and transferred to the loading unit 101. For example, as illustrated in Fig. 13, the legs 110, 120, 130, and 140 are driven to cause the body unit 300 to be in an inclined posture, whereby the load can be lifted from the load receiving surface. Then, as illustrated in Fig. 14, the robot device 100 takes out the load from the carriage 1000 by driving the legs 110, 120, 130, and 140 to retreat from the carriage 1000 while keeping the inclination of the body unit 300.

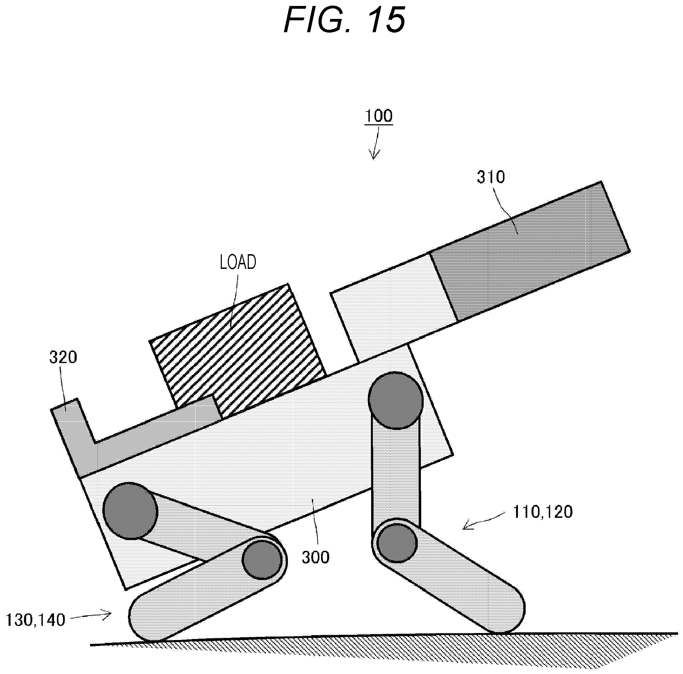

As can be seen from Figs. 4 and 12, the claws 311 and 312 of the gripper 310 have an L-shaped cross section. Thus, when the gripper 310 is closed to grip the load, the tips of the claws 311 and 312 are inserted between the bottom of the load and the load receiving surface (that is, under the target load), and the load can be lifted from the load receiving surface. At that time, the gripper 310 only needs to lightly grip the load. Moreover, after the load is taken out from the carriage 1000, it is possible to greatly tilt the body unit 300 and the gripper 310 to the rear of the robot device 100 by greatly bending the hind legs 130 and 140 as illustrated in Fig. 15. In such a posture, the load lightly gripped by the gripper 310 slips down an inclined surface including the L-shaped tips of the claws 311 and 312 and moves to the loading unit 101. Furthermore, since the stopper 320 is provided on the rear end edge of the loading unit 101, the load that has slipped down from the gripper 310 does not further fall from the rear end of the loading unit 101. Note that, the gripper 310 may be provided with a belt conveyor or a linear motion mechanism for pulling the load onto the loading surface.

## C. Modification (1)

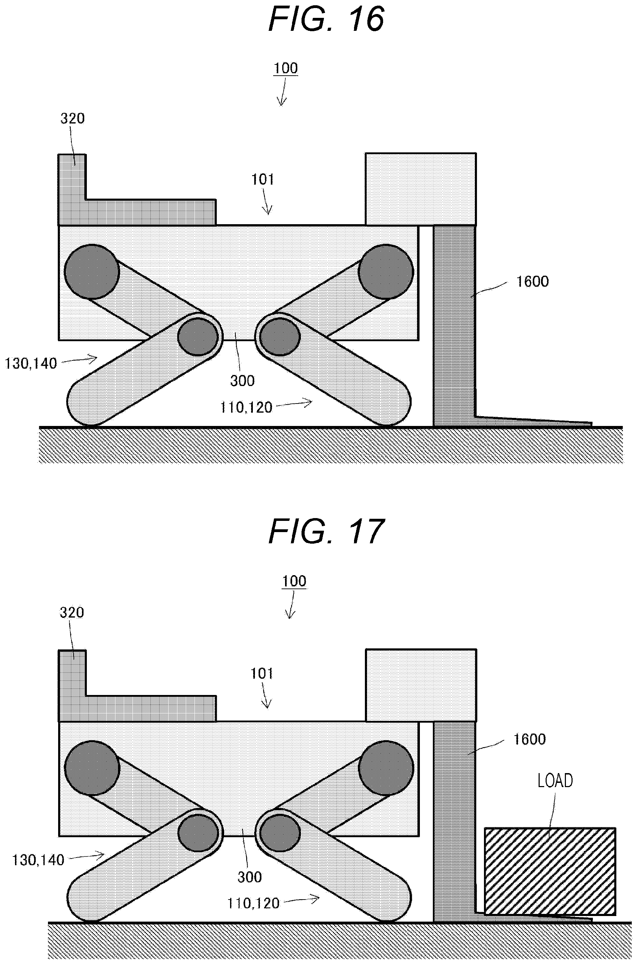

Fig. 16 illustrates an exterior configuration example of the robot device 100 provided with an elevating lift 1600 instead of the gripper as the taking-out unit that takes out a load placed on the load receiving surface. In the example illustrated in Fig. 16, the lift 1600 is arranged on a front surface portion of the body unit 300 of the robot device 100. The lift 1600 has an L-shaped fork and is suitable for loading a load installed on a floor. In this modification, a floor surface on which the load is placed is used as the load receiving surface, and the robot device 100 can scoop up and carry the load placed on the floor out in accordance with an operation procedure similar to the flowchart illustrated in Fig. 9.

The robot device 100 first roughly detects the floor surface by, for example, image recognition using a camera, determines the rotation direction of the posture of the body unit 300 after a fork portion of the lift 1600 comes into contact with the floor surface, and formulates a trajectory plan for the lift 1600. The robot device 100 executes the trajectory plan, and when the fork portion of the lift 1600 comes into contact with the floor surface, estimates the contact force $F_c$ received by the lift 1600 from the floor surface on the basis of the external force $F_b$ and the moment $M_b$ acting on the base point of the body unit 300 obtained from the whole body force control of the robot device 100.

Then, the robot device 100 rotates the posture of the body unit 300 by driving the legs 110, 120, 130, and 140 until the contact force $F_c$ from the floor surface reaches the predetermined set value F1. Moreover, the robot device 100 rotates the posture of the body unit 300 so that the contact force $F_c$ is kept at the predetermined set value F1, and when a contact point between the fork portion of the lift 1600 and the floor surface enters the vicinity of the center of a contact surface of the fork portion of the lift 1600, it is determined that the fork portion of the lift 1600 has followed the floor surface as the load receiving surface.

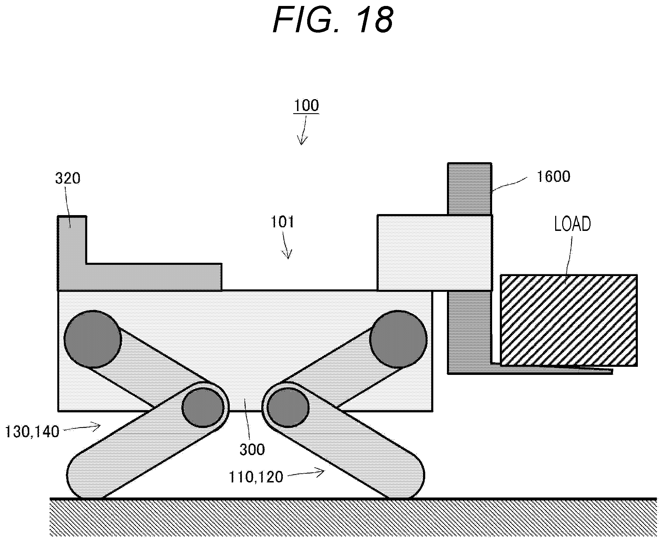

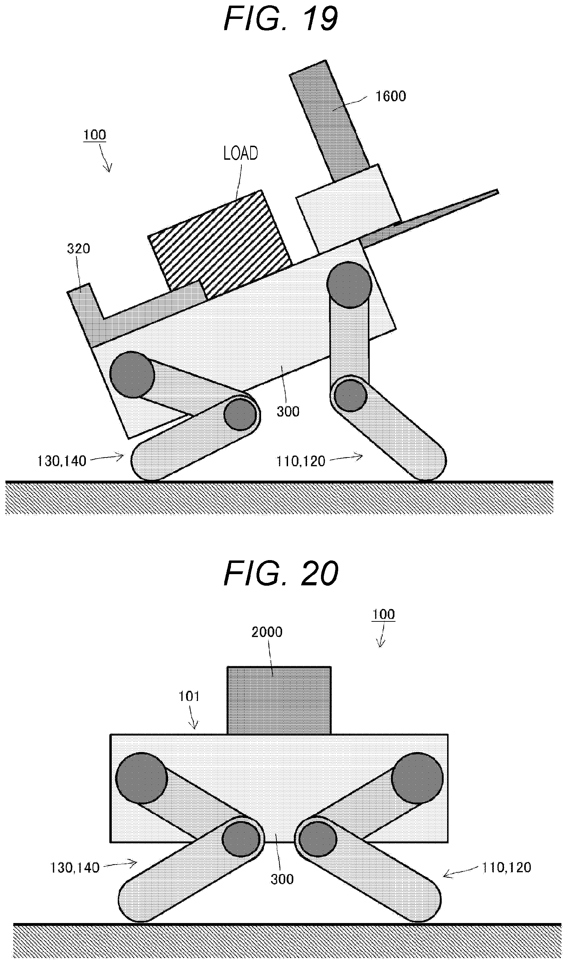

Thereafter, as illustrated in Fig. 17, the robot device 100 performs walking operation toward the target load by using the legs 110, 120, 130, and 140, and causes the fork portion of the lift 1600 to be inserted between the bottom of the load and the floor surface. Next, as illustrated in Fig. 18, the robot device 100 scoops up the load with the fork portion by raising the elevating lift 1600. When the load is raised to the same height as the loading unit 101 on the upper surface of the body unit 300, as illustrated in Fig. 19, the hind legs 130 and 140 are greatly bent, whereby the body unit 300 and the gripper 310 are greatly tilted to the rear of the robot device 100. Then, the lifted load slips down from the fork portion of the lift 1600 and moves to the loading unit 101. Furthermore, since the stopper 320 is provided on the rear end edge of the loading unit 101, the load that has slipped down from the gripper 310 does not further fall from the rear end of the loading unit 101. Note that, a belt conveyor or a linear motion mechanism may be provided for pulling the load onto the loading surface.

## D. Modification (2)

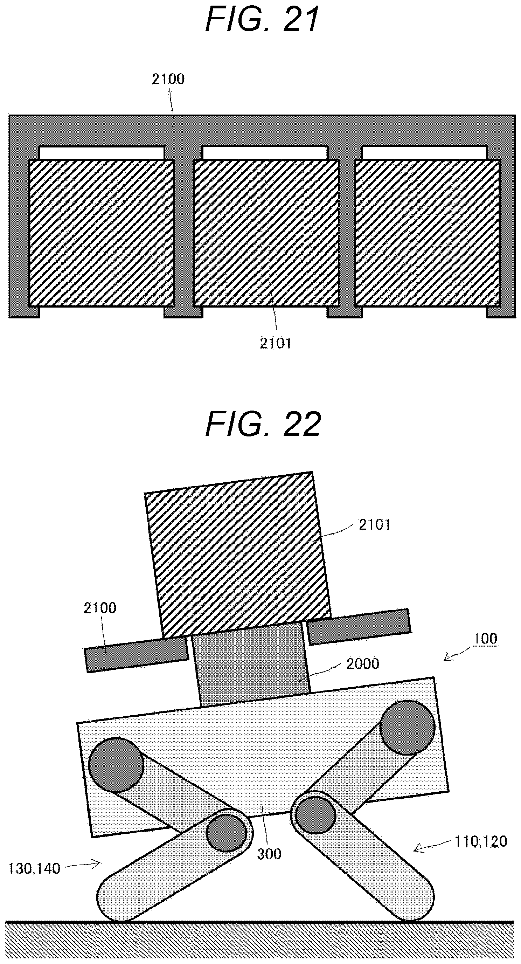

Fig. 20 illustrates an exterior configuration example of the robot device 100 provided with a protrusion 2000 that protrudes and retracts from the upper surface of the body unit 300 as the taking-out unit that takes out a load placed on a load receiving surface. The robot device 100 illustrated in Fig. 20 is designed on the assumption that a load placed on a fork-shaped tray 2100 as illustrated in Fig. 21 is taken out from the tray 2100 and transported. Fig. 21 illustrates a state in which the fork-shaped tray 2100 on which loads are placed is viewed from above. The fork-shaped tray 2100 supports side edges of the load with two teeth of the fork.

The robot device 100 illustrated in Fig. 20 gets under the fork-shaped tray 2100, and in a state in which the protrusion 2000 is raised from the upper surface of the body unit 300 directly under a target load 2101 to lift the load 2101 from the tray 2100, moves in a direction to an opening portion of the fork by walking operation, thereby being able to carry the load 2101 out from the tray 2100. Fig. 22 illustrates a state in which the robot device 100 raises the protrusion 2000 from the lower side of the tray 2100 and pushes up the load 2101. In this modification, the back surface of the tray 2100 on which the load 2101 is placed is used as the load receiving surface, and the robot device 100 can lift the load placed on the fork-shaped tray 2100 and carry the load out, in accordance with an operation procedure similar to the flowchart illustrated in Fig. 9. Note that, it is also assumed that the tray 2100 is tilted from the horizontal as the example illustrated in Fig. 22.

The robot device 100 first roughly detects the back surface of the tray 2100 by, for example, image recognition using a camera, determines the rotation direction of the posture of the body unit 300 after the loading unit 101 on the upper surface of the body unit 300 comes into contact with the back surface of the tray 2100, and formulates a trajectory plan for the body unit 300. The robot device 100 executes the trajectory plan, and when the loading unit 101 comes into contact with the back surface of the tray 2100, estimates the contact force $F_c$ received by the loading unit 101 from the back surface of the tray 2100 on the basis of the external force $F_b$ and the moment $M_b$ acting on the base point of the body unit 300 obtained from the whole body force control of the robot device 100.

Then, the robot device 100 rotates the posture of the body unit 300 by driving the legs 110, 120, 130, and 140 until the contact force $F_c$ from the back surface of the tray 2100 reaches the predetermined set value F1. Moreover, the robot device 100 rotates the posture of the body unit 300 so that the contact force $F_c$ is kept at the predetermined set value F1, and when a contact point between the loading unit 101 and the back surface of the tray 2100 enters the vicinity of the center of the loading unit 101, it is determined that the loading unit 101 has followed the back surface of the tray 2100 as the load receiving surface.

Thereafter, as illustrated in Fig. 21, the robot device 100 lifts the load 2101 from the tray 2100 by raising the protrusion 2000. Then, the robot device 100 performs walking operation toward the opening portion of the fork by using the legs 110, 120, 130, and 140 while the load 2101 is lifted, and carries the load 2101 out from the tray 2100. After getting out from the tray 2100, the robot device 100 lowers the protrusion 2000, thereby being in a state in which the load 2101 is loaded on the loading unit 101.

E. Modification (3)

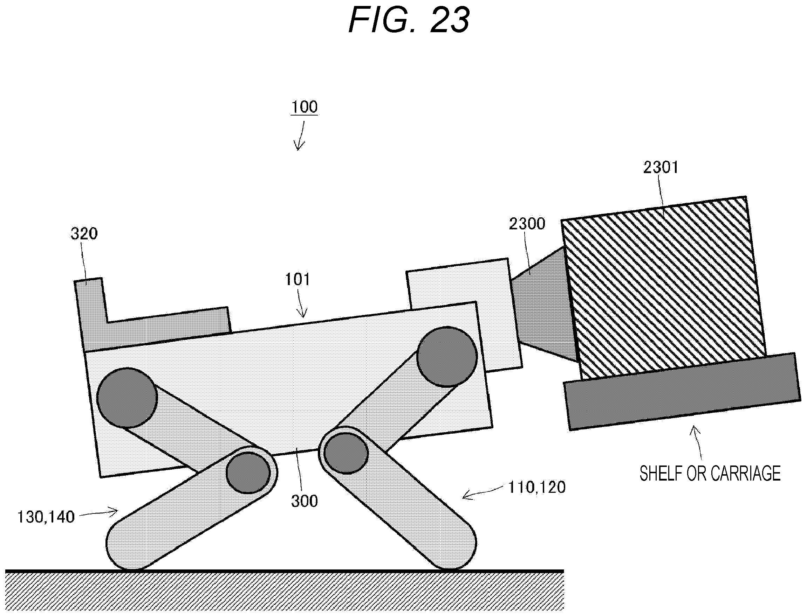

Fig. 23 illustrates an exterior configuration example of the robot device 100 provided with a suction unit 2300 arranged on the front face of the body unit 300 as the taking-out unit that takes out a load placed on a shelf or the like. As illustrated in Fig. 23, the robot device 100 according to this modification is designed on the assumption that a wall surface of a target load 2301 is sucked and lifted by air pressure or the like, and then taken out from a shelf or the like and transported.

The robot device 100 illustrated in Fig. 23 advances toward the load 2301 placed on a shelf or a carriage and causes the suction unit 2300 to follow the wall surface of the load 2301 and come into contact with the load 2301, thereby being able to suck the load 2301 with high accuracy. In this modification as well, the robot device 100 can lift and carry the load 2301 out in accordance with an operation procedure similar to the flowchart illustrated in Fig. 9. Note that, it is also assumed that the load 3301 is tilted from the horizontal as the example illustrated in Fig. 23.

The robot device 100 first roughly detects the wall surface of the load 2301 by, for example, image recognition using a camera, determines the rotation direction of the posture of the body unit 300 after a suction port of the suction unit 2300 comes into contact with the wall surface of the load 2301, and formulates a trajectory plan for the suction unit 2300. The robot device 100 executes the trajectory plan, and when the suction port of the suction unit 2300 comes into contact with the wall surface of the load 2301, estimates the contact force $F_c$ received by the suction unit 2300 from the wall surface of the load 2301 on the basis of the external force $F_b$ and the moment $M_b$ acting on the base point of the body unit 300 obtained from the whole body force control of the robot device 100.

Then, the robot device 100 rotates the posture of the body unit 300 by driving the legs 110, 120, 130, and 140 until the contact force $F_c$ from the wall surface of the load 2301 reaches the predetermined set value F1. Moreover, the robot device 100 rotates the posture of the body unit 300 so that the contact force $F_c$ is kept at the predetermined set value F1, and when a contact point between the suction port of the suction unit 2300 and the wall surface of the load 2301 enters the vicinity of the center of a contact surface of the suction port of the suction unit 2300, it is determined that the suction port of the suction unit 2300 has followed the wall surface of the load 2301.

Thereafter, the robot device 100 causes the suction unit 2300 to suck the load 2301 by air pressure or the like, and retreats from the shelf or the carriage on which the load 2301 is placed by walking operation using the legs 110, 120, 130, and 140, and moves to a transport destination of the load.

F. Modification (4)

Figs. 5 to 8 and 11 to 15 illustrate the configuration and operation of the robot device 100 provided with a gripper attached to the body unit 300 as the taking-out unit for taking out the load placed on the load receiving surface. In a case where the gripper is fixed to the body unit 300, the load can only be taken out within a range between a height of the gripper when the legs 110, 120, 130, and 140 are bent and a height of the gripper when the legs 110, 120, 130, and 140 are straightened.

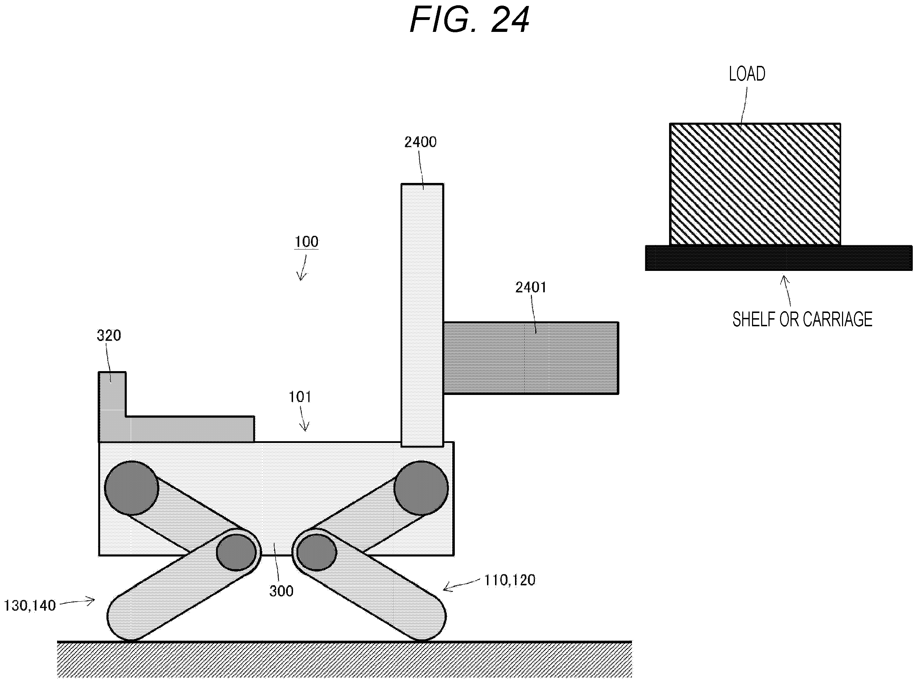

On the other hand, in the robot device 100 illustrated in Fig. 24, a gripper 2401 is attached to the body unit 300 via a lift 2400 capable of lifting operation. Thus, the robot device 100 can grip and take out a load having a height within an operation range of the lift 2400 with the gripper 2401. In this modification as well, the robot device 100 can scoop up and carry the load placed on a high shelf or the like out in accordance with an operation procedure similar to the flowchart illustrated in Fig. 9.

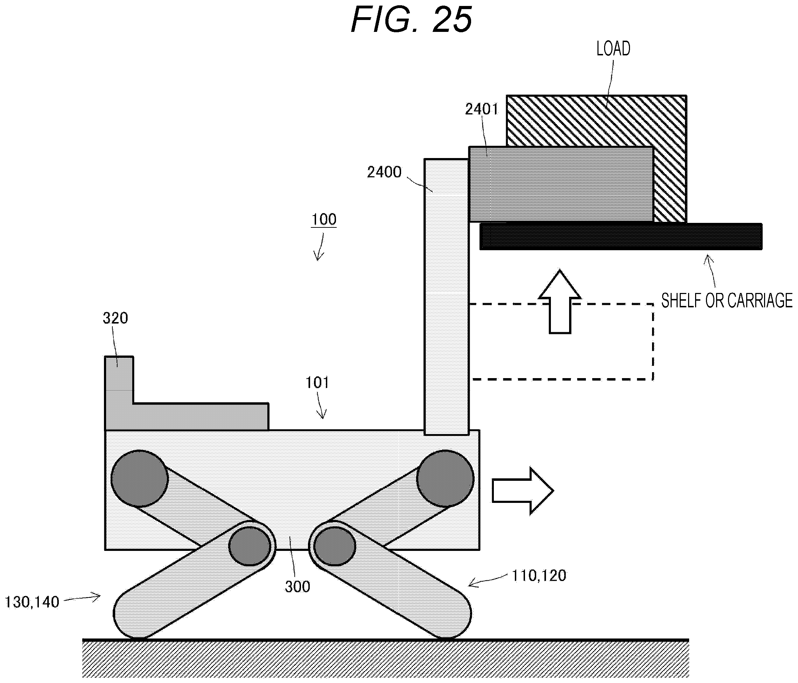

The robot device 100 first roughly detects the load receiving surface by, for example, image recognition using a camera, determines a height of the lift 2400 for accessing the load receiving surface and the rotation direction of the posture of the body unit 300 after the gripper 2401 comes into contact with the load receiving surface, and formulates a trajectory plan for the body unit 300, including lifting operation of the lift 2400. The robot device 100 executes the formulated trajectory plan, causes the lift 2400 to perform lifting operation as illustrated in Fig. 25, and brings the gripper 2401 closer to the load on the load receiving surface by the walking operation. Then, when the gripper 2401 comes into contact with the load receiving surface, the contact force $F_c$ received by the gripper 2401 from the load receiving surface is estimated on the basis of the external force $F_b$ and the moment $M_b$ acting on the base point of the body unit 300 obtained from the whole body force control of the robot device 100.

Then, the robot device 100 rotates the posture of the body unit 300 by driving the legs 110, 120, 130, and 140 until the contact force $F_c$ from the load receiving surface reaches the predetermined set value F1. Moreover, the robot device 100 rotates the posture of the body unit 300 so that the contact force $F_c$ is kept at the predetermined set value F1, and when a contact point between the gripper 2401 and the load receiving surface enters the vicinity of the center of a contact surface of the gripper 2401, it is determined that the gripper 2401 has followed the floor surface as the load receiving surface.

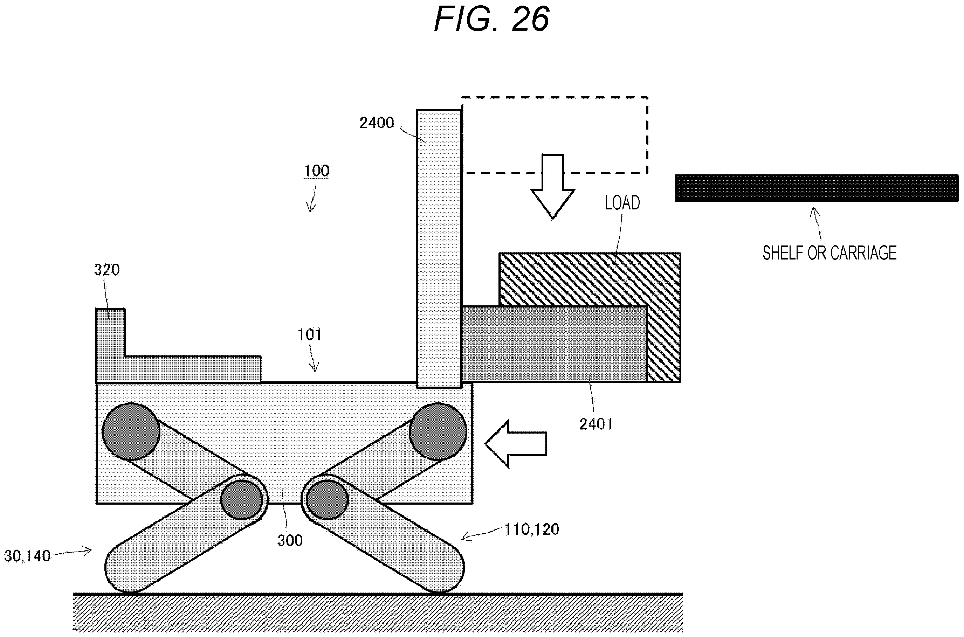

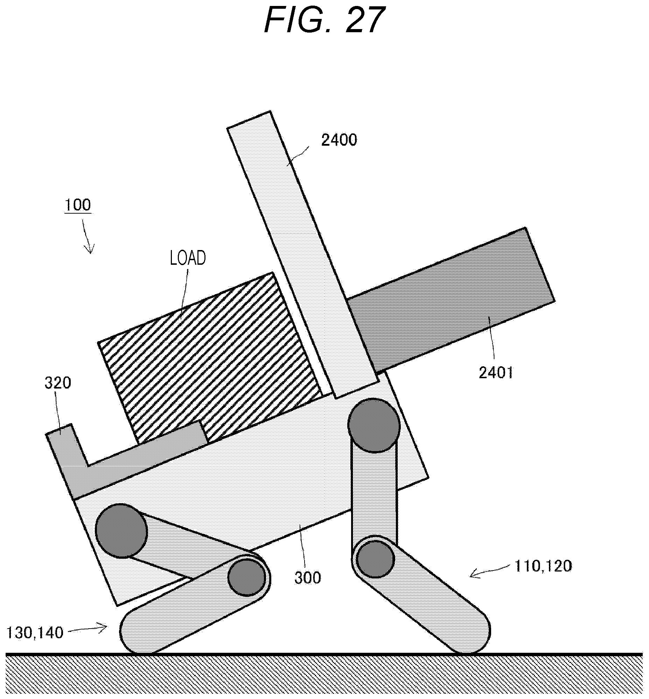

The robot device 100 can lift the load from the load receiving surface by closing the gripper 2401 to grip the load and raising the lift 2400 a little further. Next, the robot device 100 retreats from the shelf or the like on which the load is placed by walking operation, then lowers the lift 2400 as illustrated in Fig. 26, and aligns the gripper 2401 to the same height as the loading unit 101 on the upper surface of the body unit 300. Next, as illustrated in Fig. 27, the robot device 100 greatly tilts the body unit 300 and the gripper 310 to the rear of the robot device 100 by greatly bending the hind legs 130 and 140. Then, the lifted load slips down from the gripper 2401 and moves to the loading unit 101. Furthermore, since the stopper 320 is provided on the rear end edge of the loading unit 101, the load that has slipped down from the gripper 310 does not further fall from the rear end of the loading unit 101. Note that, the gripper 2401 may be provided with a belt conveyor or a linear motion mechanism for pulling the load onto the loading surface.

F. Modification (4)

In all of the robot devices 100 described so far, a change of the posture of the body unit 300 or the loading unit 101 and movement of the robot device 100 main body have been implemented by driving the legs 110, 120, 130, and 140.

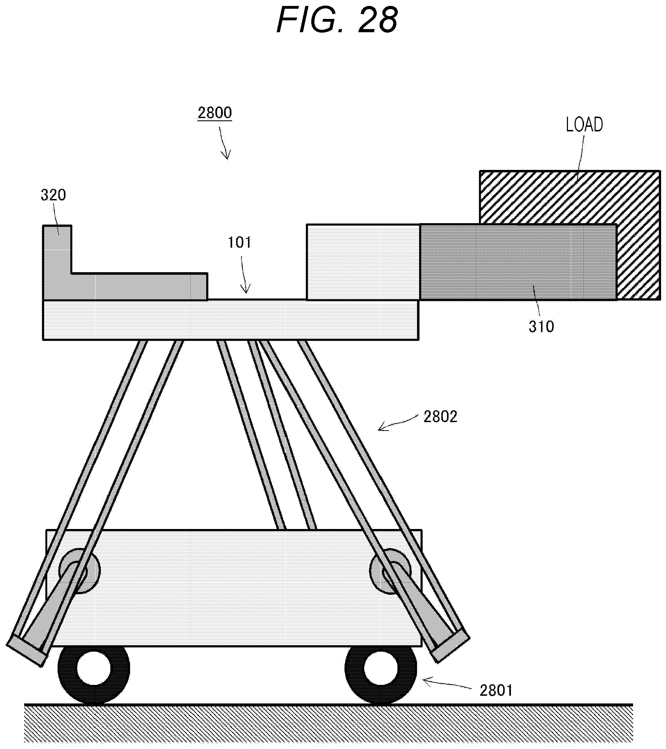

On the other hand, a robot device 2800 illustrated in Fig. 28 is configured to move by using wheels 2801 and change the posture of the loading unit 101 by using a parallel link 2802. Note that, in the example illustrated in Fig. 28, a gripper is used to take out a load, but of course, a gripper with a fork-shaped lift, a protrusion, or an elevating lift can also be applied. Furthermore, also in the robot device 2800 illustrated in Fig. 28, a load placed on various load receiving surfaces can be scooped up and carried out in accordance with an operation procedure similar to the flowchart illustrated in Fig. 9.

Note that, the parallel link includes a mechanism that supports an output end (corresponding to the loading unit 101 in the example illustrated in Fig. 28) by a plurality of link mechanisms arranged in parallel, and it is possible to determine movement of the output end by simultaneously controlling drive of the link mechanisms. The parallel link mechanism has a feature that its operation range is relatively wide and high-speed and high-precision operation control is possible. For details of the parallel link mechanism, refer to, for example, Patent Document 4.

G. Modification (5)

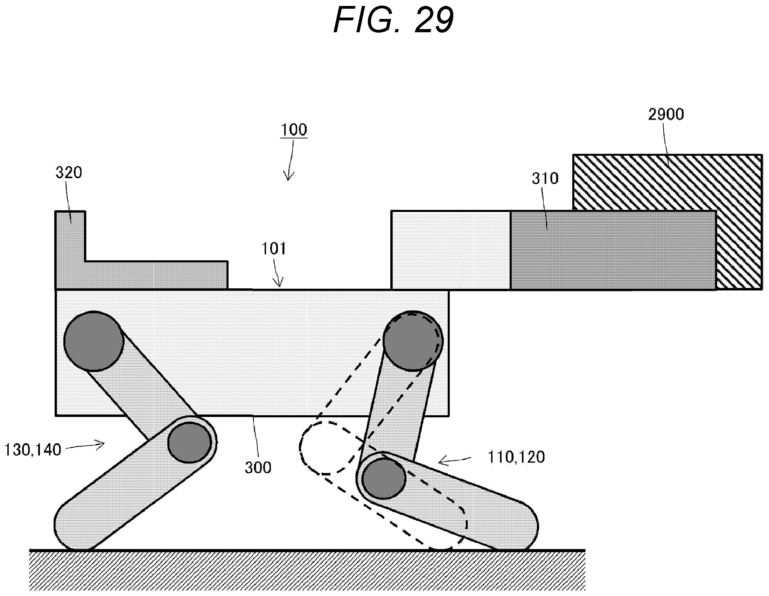

Fig. 29 illustrates a modification of the robot device 100 illustrated in Fig. 5 and the like, regarding a gait when gripping a load.

When a load 2900 is gripped by the gripper 310 in front of the robot device 100, a position of the center of gravity of the entire robot device 100 including the load 2900 shifts forward as compared with a case of the robot device 100 alone. As the weight of the load 2900 becomes heavier, the position of the center of gravity shifts more forward. As a result, a margin between the position of the center of gravity and a boundary of the support polygon becomes small, which increases the risk of the robot device 100 falling over. Thus, as illustrated in Fig. 29, when gripping the load 2900, the robot device 100 may perform correction to have a gait of the legs 110 and 120 in which the forelegs protrude forward as much as possible. In Fig. 29, the gait of the legs 110 and 120 before the correction is illustrated by a dotted line. Causing the forelegs to protrude in this way expands the support polygon of the robot device 100 forward, so that it is possible to reduce the risk of falling over when gripping the load 2900.

H. Modification (6)

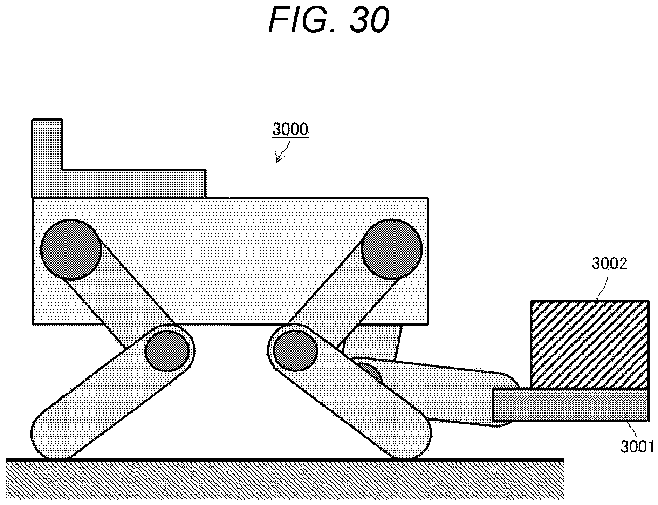

Fig. 30 illustrates a configuration example of a robot device 3000 provided with a gripper 3001 on a foreleg. In the robot device 3000, the leg also play a role of taking out a load in addition to moving and changing the posture. The robot device 3000 can scoop up and carry the load out in accordance with an operation procedure similar to the flowchart illustrated in Fig. 9 by causing the gripper 3001 at the leg tip to follow the floor surface as the load receiving surface.

The robot device 3000 first roughly detects the floor surface as the load receiving surface by, for example, image recognition using a camera, determines the rotation direction of the posture of the body unit after the gripper 3001 at the leg tip comes into contact with the load receiving surface, and formulate a trajectory plan for the body unit. The robot device 3000 executes the formulated trajectory plan and brings the gripper 3001 closer to the load 3002 on the floor by operation of the legs. Then, when the gripper 3001 comes into contact with the load receiving surface, the contact force $F_c$ received by the gripper 3001 from the load receiving surface is estimated on the basis of the external force $F_b$ and the moment $M_b$ acting on the base point of the body unit obtained from the whole body force control of the robot device 3000.

Then, the robot device 3000 rotates the posture of the body unit by driving the legs until the contact force $F_c$ from the floor surface reaches the predetermined set value F1. Moreover, the robot device 3000 rotates the posture of the body unit or the leg tip so that the contact force $F_c$ is kept at the predetermined set value F1, and when a contact point between the gripper 3001 and the floor surface enters the vicinity of the center of a contact surface of the gripper 3001, it is determined that the gripper 3001 has followed the floor surface. Then, the robot device 3000 can lift the load 3002 from the floor surface by closing the gripper 3001 to grip the load and raising the leg tip.

The robot device 3000 utilizes the posture control of the body unit and the degree of freedom of the leg to cause the gripper 3001 at the leg tip to follow the load receiving surface, grips the load 3002, and further moves the load to the body unit, whereby a range is expanded in which the load can be pulled out. The robot device 3000 can directly pull up the load 3002 placed on the floor if it has a space for loading the load in the front, the rear, or the lower part of the body unit.

I. Modification (7)

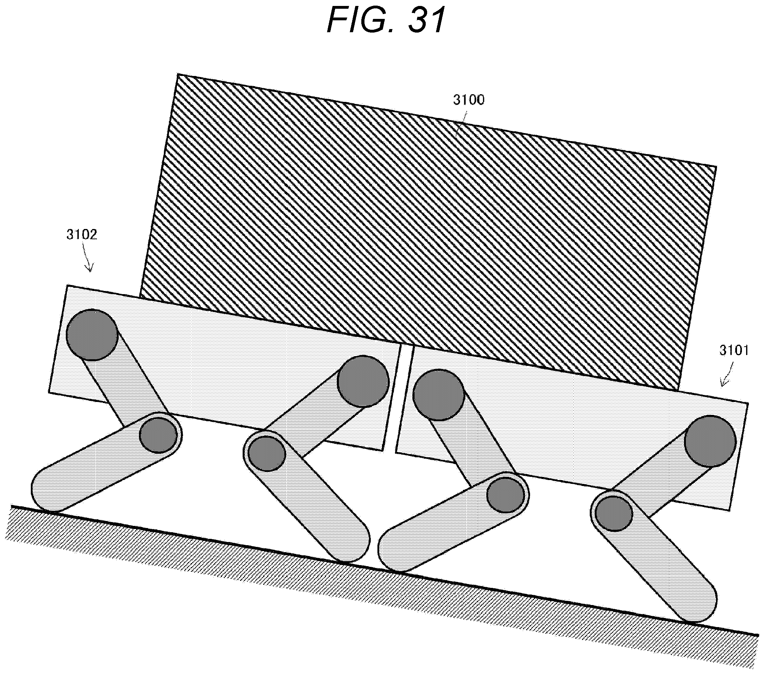

Fig. 31 illustrates a modification in which a plurality of robot devices (in the illustrated example, two robot devices, a robot device 3101 and a robot device 3102) cooperates to carry one load 3100 out. The robot devices 3101 and 3102 are subjected to posture control by the whole body force control and are caused to follow each other so that loading surfaces of them are on the same plane, whereby the large-capacity load 3100 can be stably loaded across the two robot devices 3101 and 3102. Furthermore, even the load 3100 that is heavy and cannot be carried by one device can be transported by using the two robot devices 3101 and 3102.

J. Modification (7)

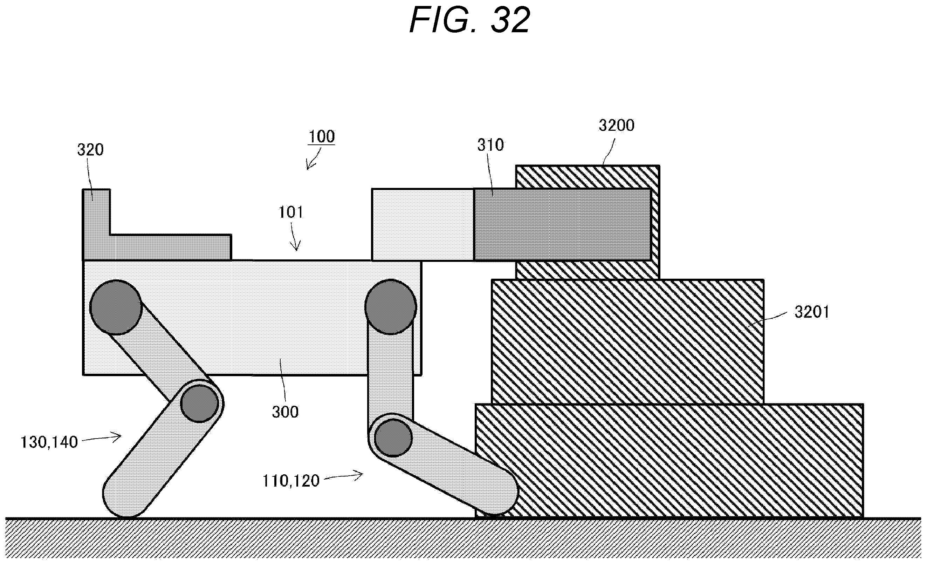

Fig. 32 illustrates a state in which the robot device 100 illustrated in Fig. 5 and the like pulls out one load 3200 from a plurality of loads piled up in bulk. In this case, the robot device 100 causes the body unit 300 or the loading unit 101 to follow the upper surface of the load 3201 directly under the load 3200, thereby being able to scoop up and carry the load 3200 out in accordance with an operation procedure similar to the flowchart illustrated in Fig. 9.

The robot device 100 first roughly detects the load receiving surface by, for example, image recognition using a camera, determines the rotation direction of the posture of the body unit 300 after the gripper 310 comes into contact with the load receiving surface, and formulates a trajectory plan for the body unit 300. The load receiving surface referred to here is the upper surface of the load 3201 directly under the load 3200.

The robot device 100 executes the formulated trajectory plan and brings the gripper 310 closer to the load receiving surface on the load receiving surface by walking motion. Then, when the gripper 2401 comes into contact with the load receiving surface, the contact force $F_c$ received by the gripper 310 from the load receiving surface is estimated on the basis of the external force $F_b$ and the moment $M_b$ acting on the base point of the body unit 300 obtained from the whole body force control of the robot device 100.

Then, the robot device 100 rotates the posture of the body unit 300 by driving the legs 110, 120, 130, and 140 until the contact force $F_c$ from the load receiving surface reaches the predetermined set value F1. Moreover, the robot device 100 rotates the posture of the body unit 300 so that the contact force $F_c$ is kept at the predetermined set value F1, and when a contact point between the gripper 310 and the load receiving surface enters the vicinity of the center of the contact surface of the gripper 310, it is determined that the gripper 310 has followed the floor surface as the load receiving surface.

The robot device 100 closes the gripper 310 to grip the load 3200, and lifts the load 3200 from the load receiving surface. Next, after retreating from, for example, a place where the load 3200 is piled up in bulk by walking operation, the robot device 100 greatly tilts the body unit 300 and the gripper 310 to the rear of the robot device 100 by greatly bending the hind legs 130 and 140. Then, the lifted load slips down from the gripper 310 and moves to the loading unit 101. Furthermore, since the stopper 320 is provided on the rear end edge of the loading unit 101, the load 3200 that has slipped down from the gripper 310 does not further fall from the rear end of the loading unit 101.

K. Other modification

All of the robot devices described so far basically have a structure in which the taking-out unit such as a gripper is provided in front of the robot device (or the body unit) to pull a load into the loading unit on the upper surface of the body unit. On the other hand, it is also possible to configure the robot device so that a space for accommodating a load is provided at the rear or lower part of the body unit, the posture of the bottom surface of the body unit is caused to follow the floor surface, and the load is pulled into the space.

L. Summary

Finally, a summary will be given of the effects brought about by the robot device to which the technology according to the present disclosure is applied.

(1) The robot device can individually take out the target load from the shelf, the carriage, or the like on which one or a plurality of loads is placed.

(2) Since the robot device can take out the load from the load receiving surface without using the arm with multiple degrees of freedom, the device cost can be reduced and a small and lightweight robot device can be configured.

(3) Even in an uncertain situation where the inclination of the load receiving surface is unknown or the accuracy of the bottom surface of the load is insufficient, the robot device can reliably scoop up the load by causing the loading unit to follow the load receiving surface by the whole body force control.

(4) The robot device can quietly pull out or place the load or precision package packed in a soft box such as corrugated cardboard with a small gripping force without crushing it, by causing the loading unit to follow the load receiving surface by the whole body force control.

(5) The robot device pulls the load gripped by the gripper or the like to the body unit, whereby the center of gravity of the entire robot device including the load moves to the vicinity of the center of the support polygon, so that the posture stabilizes and the risk of falling over is low.

(6) Since the robot device lifts the load from the lower side thereof, no additional gripper or pull-in mechanism is required, and the structure that takes out the load from the load receiving surface can be simplified.

(7) The robot device can reliably suck the wall surface of the load by combination with the suction unit having a suction function by air pressure or the like.

(8) The robot device can easily pull out the load regardless of whether the load receiving surface is high or low by attaching the gripper via a lift capable of lifting operation.

(9) The robot device moves the leg tips of the front legs forward when gripping the load to expand the support polygon forward, whereby the risk of falling over can be reduced even if the position of the center of gravity including the load shifts forward.

(10) The robot device can directly pull up the load placed on the floor if it has a space for loading the load in the front, the rear, or the lower part of the body unit.

(11) If the robot device is provided with the taking-out unit such as the gripper at the leg tip of the leg, it is possible to cause the leg tip to follow the load receiving surface to grip the load, and the load is further moved to the body unit, whereby the range is expanded in which the load can be pulled out.

(12) By causing body postures of a plurality of robot devices to follow each other by the whole body force control, it is possible to stably carry a large load while cooperating.

(13) The robot device can reliably scoop up the load by causing the upper surface of the load directly under the target load to be followed from among loads piled in bulk.

INDUSTRIAL APPLICABILITY

In the above, the technology according to the present disclosure has been described in detail with reference to specific embodiments. However, it is obvious that those skilled in the art can make modifications and substitutions of the embodiments without departing from the scope of the technology according to the present disclosure.

The technology according to the present disclosure can be similarly applied to a robot device or a mobile device provided with a plurality of moving means other than the legs. For example, a configuration may be adopted in which a wheel-type mobile device (including an autonomous vehicle) provided with a plurality of wheels is equipped with a parallel link including a plurality of mechanisms arranged in parallel and a final output destination as a loading platform.

In short, the technology according to the present disclosure has been described in the form of exemplification, and the description content of the present specification should not be interpreted restrictively. To determine the gist of the technology according to the present disclosure, the claims should be taken into consideration.

Note that, the technology according to the present disclosure can also have the following configuration.

(1) A robot device including:

a loading unit on which a load is placed;
a posture changing unit that changes a posture of the loading unit;
a moving unit that moves the loading unit; and
a control unit that controls operation of the posture changing unit and the moving unit,
in which
the control unit performs force control of the posture changing unit to cause the loading unit to follow a load receiving surface.

(2) The robot device according to (1), in which
the posture changing unit includes a plurality of link structures that supports the loading unit.
(3) The robot device according to either of (1) or (2), in which
the posture changing unit and the moving unit include a plurality of movable legs.
(4) The robot device according to either of (1) or (2), in which
the posture changing unit includes a parallel link, and the moving unit includes a wheel.
(5) The robot device according to any of (1) to (4), further including
a taking-out unit that takes out the load placed on the load receiving surface and moves the load to the loading unit.
(6) The robot device according to (5), in which
the control unit performs force control of the posture changing unit to cause the loading unit to follow the load receiving surface, and then controls the taking-out unit to take out the load placed on the load receiving surface and move the load to the loading unit.
(7) The robot device according to (6), in which
the control unit estimates a contact point position between the taking-out unit and the load receiving surface on the basis of force control that changes a posture of the posture changing unit, performs posture control of the loading unit by the posture changing unit to cause the contact point position to move to a vicinity of a center of a contact surface between the taking-out unit and the load receiving surface, and determines that the loading unit has followed the load receiving surface when the contact point position has entered the vicinity of the center of the contact surface.
(8) The robot device according to any of (5) to (7), in which
the taking-out unit includes at least one of an openable gripper, an elevating lift, or the openable gripper attached to the elevating lift.
(9) The robot device according to (5), in which

the taking-out unit includes a protrusion that protrudes and retracts from the loading unit, and
the control unit performs force control of the posture changing unit to cause the loading unit to follow the load receiving surface, and then performs control to cause the protrusion to protrude from an opening provided in the load receiving surface to scoop up the load.

(10) The robot device according to (5), in which

the taking-out unit includes a suction unit, and
force control of the posture changing unit is performed to cause the suction unit to follow a wall surface of the load, and then control is performed to suck the wall surface of the load by the suction unit to take out the load from the load receiving surface.

(11) The robot device according to (5), in which
the taking-out unit includes an elevating lift and an openable gripper attached to the lift.

(12) The robot device according to any of (5) to (11), in which
the control unit controls the posture changing unit or the moving unit to cause a support polygon to expand in a direction to the load when the load is taken out by the taking-out unit.

(13) The robot device according to (5), in which

the moving unit includes a movable leg,
the taking-out unit includes a gripper attached to a leg tip of the movable leg, and
the control unit performs force control of the movable leg to cause the gripper at the leg tip to follow a floor surface, and then performs control to grip a load placed on the floor surface by the gripper.

(14) The robot device according to (5), in which

when a specific load is taken out from loads piled up in bulk,
the control unit performs force control of the posture changing unit to cause the loading unit to follow an upper surface of a load immediately below the specific load, and then controls the taking-out unit to take out the specific load and move the specific load to the loading unit.

(15) A method for controlling a robot device including a loading unit on which a load is placed, a posture changing unit that changes a posture of the loading unit, and a moving unit that moves the loading unit,
the method including:

a step of performing force control of the posture changing unit to cause the loading unit to follow a load receiving surface; and
a step of taking out a load placed on the load receiving surface.

REFERENCE SIGNS LIST

| | |
|---|---|
| 100 | Robot device |
| 101 | Loading unit |
| 110 | Movable leg |
| 111 | Link (second link) |
| 112 | Link (first link) |
| 113 | Joint unit (second joint) |
| 114 | Joint unit (first joint) |
| 120 | Movable leg |
| 121 | Link (second link) |
| 122 | Link (first link) |
| 123 | Joint unit (second joint) |
| 124 | Joint unit (first joint) |
| 130 | Movable leg |
| 131 | Link (second link) |
| 132 | Link (first link) |
| 133 | Joint unit (second joint) |
| 134 | Joint unit (first joint) |
| 140 | Movable leg |
| 141 | Link (second link) |
| 142 | Link (first link) |
| 143 | Joint unit (second joint) |
| 144 | Joint unit (first joint) |
| 210 | External sensor unit |
| 211L, | 211R Camera |
| 212 | Microphone |

| 213 | Touch sensor |
|---|---|
| 221 | Speaker |
| 222 | Display unit |
| 230 | Controller unit |
| 231 | Main control unit |
| 232 | Battery |
| 233 | Internal sensor unit |
| 233A | Battery sensor |
| 233B | Acceleration sensor |
| 234 | External memory |
| 235 | Communication unit |
| 241, 242, 243, 244 | Sub-control unit |
| 300 | Body unit |
| 310 | Gripper |
| 311, 312 | Claw |
| 320 | Stopper |
| 1000 | Carriage |
| 1600 | Lift |
| 2100 | Fork-shaped tray |
| 2300 | Suction unit |
| 2400 | Elevating lift |
| 2401 | Gripper |
| 2800 | Robot device |
| 2801 | Wheel |
| 2802 | Parallel link |
| 3101, 3102 | Robot device |

**Claims**

1. A robot device comprising:

   a loading unit on which a load is placed;
   a posture changing unit that changes a posture of the loading unit;
   a moving unit that moves the loading unit; and
   a control unit that controls operation of the posture changing unit and the moving unit,
   wherein
   the control unit performs force control of the posture changing unit to cause the loading unit to follow a load receiving surface.

2. The robot device according to claim 1, wherein
   the posture changing unit includes a plurality of link structures that supports the loading unit.

3. The robot device according to claim 1, wherein
   the posture changing unit and the moving unit include a plurality of movable legs.

4. The robot device according to claim 1, wherein
   the posture changing unit includes a parallel link, and the moving unit includes a wheel.

5. The robot device according to claim 1, further comprising
   a taking-out unit that takes out the load placed on the load receiving surface and moves the load to the loading unit.

6. The robot device according to claim 5, wherein
   the control unit performs force control of the posture changing unit to cause the loading unit to follow the load receiving surface, and then controls the taking-out unit to take out the load placed on the load receiving surface and move the load to the loading unit.

7. The robot device according to claim 6, wherein

the control unit estimates a contact point position between the taking-out unit and the load receiving surface on a basis of force control that changes a posture of the posture changing unit, performs posture control of the loading unit by the posture changing unit to cause the contact point position to move to a vicinity of a center of a contact surface between the taking-out unit and the load receiving surface, and determines that the loading unit has followed the load receiving surface when the contact point position has entered the vicinity of the center of the contact surface.

8. The robot device according to claim 5, wherein
the taking-out unit includes at least one of an openable gripper, an elevating lift, or the openable gripper attached to the elevating lift.

9. The robot device according to claim 5, wherein

the taking-out unit includes a protrusion that protrudes and retracts from the loading unit, and
the control unit performs force control of the posture changing unit to cause the loading unit to follow the load receiving surface, and then performs control to cause the protrusion to protrude from an opening provided in the load receiving surface to scoop up the load.

10. The robot device according to claim 5, wherein

the taking-out unit includes a suction unit, and
force control of the posture changing unit is performed to cause the suction unit to follow a wall surface of the load, and then control is performed to suck the wall surface of the load by the suction unit to take out the load from the load receiving surface.

11. The robot device according to claim 5, wherein
the taking-out unit includes an elevating lift and an openable gripper attached to the lift.

12. The robot device according to claim 5, wherein
the control unit controls the posture changing unit or the moving unit to cause a support polygon to expand in a direction to the load when the load is taken out by the taking-out unit.

13. The robot device according to claim 5, wherein

the moving unit includes a movable leg,
the taking-out unit includes a gripper attached to a leg tip of the movable leg, and
the control unit performs force control of the movable leg to cause the gripper at the leg tip to follow a floor surface, and then performs control to grip a load placed on the floor surface by the gripper.

14. The robot device according to claim 5, wherein

when a specific load is taken out from loads piled up in bulk,
the control unit performs force control of the posture changing unit to cause the loading unit to follow an upper surface of a load immediately below the specific load, and then controls the taking-out unit to take out the specific load and move the specific load to the loading unit.

15. A method for controlling a robot device including a loading unit on which a load is placed, a posture changing unit that changes a posture of the loading unit, and a moving unit that moves the loading unit,
the method comprising:

a step of performing force control of the posture changing unit to cause the loading unit to follow a load receiving surface; and
a step of taking out a load placed on the load receiving surface.

# FIG. 1

EP 4 043 157 A1

## FIG. 2

# FIG. 3

# FIG. 4

# FIG. 5

EP 4 043 157 A1

# FIG. 6

EP 4 043 157 A1

# FIG. 7

EP 4 043 157 A1

# FIG. 8

# FIG. 9

```
                    ┌─────────────────┐
                    │      START      │
                    └─────────────────┘
                             │
                             ▼
S901 ── ┌──────────────────────────────────────────────────────┐
        │  ROUGHLY DETECT INCLINATION OF LOAD RECEIVING SURFACE │
        └──────────────────────────────────────────────────────┘
                             │
                             ▼
S902 ── ┌──────────────────────────────────────────────────────┐
        │   DETERMINE ROTATION DIRECTION OF POSTURE OF BODY UNIT│
        │ AFTER GRIPPER COMES IN CONTACT WITH LOAD RECEIVING    │
        │        SURFACE, AND FORMULATE TRAJECTORY PLAN FOR     │
        │                      GRIPPER                          │
        └──────────────────────────────────────────────────────┘
                             │
                             ▼
S903 ── ┌──────────────────────────────────────────────────────┐
        │               EXECUTE TRAJECTORY PLAN                 │
        └──────────────────────────────────────────────────────┘
                             │
                             ▼
S904 ── ┌──────────────────────────────────────────────────────┐
        │ ESTIMATE CONTACT FORCE AND CONTACT POINT POSITION     │
        │ BETWEEN GRIPPER AND LOAD RECEIVING SURFACE, FROM      │
        │ DYNAMICS (Fb, Mb) OF BASE POINT OF BODY UNIT OBTAINED │
        │ FROM WHOLE BODY FORCE CONTROL, AND DRIVE BODY UNIT    │
        │ UNTIL CONTACT FORCE REACHES SET VALUE Fc              │
        └──────────────────────────────────────────────────────┘
                             │
                             ▼
S905 ── ┌──────────────────────────────────────────────────────┐
        │ ROTATE BODY UNIT IN DETERMINED ROTATION DIRECTION,    │
        │ BY WHOLE BODY FORCE CONTROL WHILE KEEPING CONTACT     │
        │ FORCE Fc ACTING ON GRIPPER                            │
        └──────────────────────────────────────────────────────┘
                             │
                             ▼
S906 ── ┌──────────────────────────────────────────────────────┐
        │ DETERMINE THAT POSTURE OF BODY UNIT HAS FOLLOWED      │
        │ LOAD RECEIVING SURFACE WHEN POSTURE OF BODY UNIT      │
        │ BEGINS TO FOLLOW LOAD RECEIVING SURFACE, AND CONTACT  │
        │ POINT POSITION BEGINS TO VARY, AND CONTACT POINT      │
        │ POSITION REACHES VICINITY OF CENTER OF CONTACT SURFACE│
        └──────────────────────────────────────────────────────┘
                             │
                             ▼
S907 ── ┌──────────────────────────────────────────────────────┐
        │              GRIP LOAD WITH GRIPPER                   │
        └──────────────────────────────────────────────────────┘
                             │
                             ▼
S908 ── ┌──────────────────────────────────────────────────────┐
        │ PULL IN GRIPPER, AND MOVE LOAD TO LOADING UNIT        │
        └──────────────────────────────────────────────────────┘
                             │
                             ▼
                    ┌─────────────────┐
                    │       END       │
                    └─────────────────┘
```

Flowchart steps:

- **S901** — ROUGHLY DETECT INCLINATION OF LOAD RECEIVING SURFACE
- **S902** — DETERMINE ROTATION DIRECTION OF POSTURE OF BODY UNIT AFTER GRIPPER COMES IN CONTACT WITH LOAD RECEIVING SURFACE, AND FORMULATE TRAJECTORY PLAN FOR GRIPPER
- **S903** — EXECUTE TRAJECTORY PLAN
- **S904** — ESTIMATE CONTACT FORCE AND CONTACT POINT POSITION BETWEEN GRIPPER AND LOAD RECEIVING SURFACE, FROM DYNAMICS ($F_b$, $M_b$) OF BASE POINT OF BODY UNIT OBTAINED FROM WHOLE BODY FORCE CONTROL, AND DRIVE BODY UNIT UNTIL CONTACT FORCE REACHES SET VALUE $F_c$
- **S905** — ROTATE BODY UNIT IN DETERMINED ROTATION DIRECTION, BY WHOLE BODY FORCE CONTROL WHILE KEEPING CONTACT FORCE $F_c$ ACTING ON GRIPPER
- **S906** — DETERMINE THAT POSTURE OF BODY UNIT HAS FOLLOWED LOAD RECEIVING SURFACE WHEN POSTURE OF BODY UNIT BEGINS TO FOLLOW LOAD RECEIVING SURFACE, AND CONTACT POINT POSITION BEGINS TO VARY, AND CONTACT POINT POSITION REACHES VICINITY OF CENTER OF CONTACT SURFACE
- **S907** — GRIP LOAD WITH GRIPPER
- **S908** — PULL IN GRIPPER, AND MOVE LOAD TO LOADING UNIT

# FIG. 10

FIG. 11

EP 4 043 157 A1

# FIG. 12

FIG. 13

FIG. 14

EP 4 043 157 A1

# FIG. 15

# FIG. 16

100

320

101

1600

130,140

300

110,120

# FIG. 17

100

320

101

1600

LOAD

130,140

300

110,120

# FIG. 18

# FIG. 19

# FIG. 20

# FIG. 21

2100

2101

# FIG. 22

2101

2100

100

2000

130,140

300

110,120

# FIG. 23

EP 4 043 157 A1

# FIG. 24

## FIG. 25

# FIG. 26

100

320

101

2400

LOAD

SHELF OR CARRIAGE

2401

30,140

300

110,120

EP 4 043 157 A1

# FIG. 27

# FIG. 28

FIG. 29

# FIG. 30

FIG. 31

EP 4 043 157 A1

# FIG. 32

EP 4 043 157 A1

## INTERNATIONAL SEARCH REPORT

| International application No. |
| --- |
| PCT/JP2020/027055 |

**A. CLASSIFICATION OF SUBJECT MATTER**
Int.Cl. B25J5/00(2006.01)i, B65G1/00(2006.01)i, G05D1/02(2020.01)i
FI: B25J5/00C, B65G1/00501C, G05D1/02H

According to International Patent Classification (IPC) or to both national classification and IPC

**B. FIELDS SEARCHED**

Minimum documentation searched (classification system followed by classification symbols)
Int.Cl. B25J5/00, B65G1/00, G05D1/02

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2015-178141 A (TOYOTA MOTOR CORPORATION) 08.10.2015 (2015-10-08), entire text, all drawings | 1-15 |
| A | JP 2008-23639 A (FUJITSU LIMITED) 07.02.2008 (2008-02-07), entire text, all drawings | 1-15 |
| A | JP 2012-56661 A (TOYOTA INDUSTRIES CORPORATION) 22.03.2012 (2012-03-22), entire text, all drawings | 1-15 |
| A | JP 2017-109294 A (SHIMIZU CONSTRUCTION CO., LTD.) 22.06.2017 (2017-06-22), entire text, all drawings | 1-15 |
| A | JP 2016-20103 A (TOSHIBA CORPORATION) 04.02.2016 (2016-02-04), entire text, all drawings | 1-15 |
| A | JP 2016-74060 A (TOSHIBA CORPORATION) 12.05.2016 (2016-05-12), entire text, all drawings | 1-15 |

☐ Further documents are listed in the continuation of Box C.　　　☒ See patent family annex.

| | |
| --- | --- |
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 24.09.2020 | 06.10.2020 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

47

INTERNATIONAL SEARCH REPORT
Information on patent family members

International application No.

PCT/JP2020/027055

```
JP 2015-178141 A   08.10.2015   (Family: none)

JP 2008-23639 A    07.02.2008   (Family: none)

JP 2012-56661 A    22.03.2012   (Family: none)

JP 2017-109294 A   22.06.2017   (Family: none)

JP 2016-20103 A    04.02.2016   (Family: none)

JP 2016-74060 A    12.05.2016   (Family: none)
```

Form PCT/ISA/210 (patent family annex) (January 2015)

**EP 4 043 157 A1**

**Patent documents cited in the description**

- JP 2015178141 A
- JP 2008023639 A
- JP 2015208836 A
- JP 4045310 B